# EUROPÄISCHE PATENTSCHRIFT

(11) **EP 1 177 393 B1**
(45) Veröffentlichungstag und Bekanntmachung des Hinweises auf die Patenterteilung: **22.01.2003**
(21) Anmeldenummer: 00934936.6
(22) Anmeldetag: 11.05.2000
(51) Int. Cl.: F16H 61/00, F16H 63/30

(54) **ELEKTRONISCH-HYDRAULISCHE STEUEREINRICHTUNG FÜR GETRIEBE VON FAHRZEUGEN, VORZUGSWEISE VON KRAFTFAHRZEUGEN**
ELECTRONIC-HYDRAULIC CONTROL DEVICE FOR GEARBOXES OF VEHICLES, PREFERABLY MOTOR VEHICLES
UNITE DE COMMANDE ELECTRONIQUE-HYDRAULIQUE POUR BOITES DE VITESSES DE VEHICULES, DE PREFERENCE DE VEHICULES AUTOMOBILES

(30) Priorität: 11.05.1999 DE 19921535; 19.10.1999 DE 19950443
(43) Veröffentlichungstag der Anmeldung: 06.02.2002
(73) Patentinhaber: SIEMENS AKTIENGESELLSCHAFT, 80333 München (DE)
(72) Erfinder: MEYER, Roland, D-91154 Roth (DE); WILD, Andreas, D-72669 Unterensingen (DE); ULM, Michael, D-93087 Alteglofsheim (DE); SMIRRA, Karl, D-83512 Wasserburg (DE); ALBERT, Roland, D-93047 Regensburg (DE)
(86) Internationale Anmeldenummer: DE0001484
(87) Internationale Veröffentlichungsnummer: WO00068601

(56) Entgegenhaltungen:
- EP-A- 0 872 396
- EP-A- 0 926 351
- DE-A- 19 732 474
- DE-A- 19 756 639
- US-A- 4 499 789
- US-A- 5 417 124
- US-A- 5 709 134
- US-A- 5 749 060
- US-A- 5 842 753

## Beschreibung

Die Erfindung betrifft eine elektronisch-hydraulische Steuereinrichtung für Getriebe von Fahrzeugen, vorzugsweise von Kraftfahrzeugen.

Eine solche Steuereinrichtung ist aus der Patentschrift US 5,709,134 bekannt. In die Steuereinrichtung sind nur elektrische und elektronische Bauelemente integriert, nicht jedoch mechanische oder hydraulische Stellelemente. Letztere befinden sich in einem Ventilblock, der in das Automatikgetriebe eines Kraftfahrzeugs eingebaut ist. Auf Ventildomen des Ventilblocks, in denen sich von den Magnetventilen betätigte Anker befinden, wird die Steuereinrichtung aufgesetzt.

Die Patentschrift US 5,749,060 betrifft eine Steuereinrichtung für ein Automatikgetriebe mit Magnetventilen, die ebenfalls auf Ventildomen eines Ventilblocks aufgesetzt wird. Die Ventildome ragen durch das Getriebegehäuse hindurch und in das Gehäuse der Steuereinrichtung hinein. Die Steuereinrichtung befindet sich vollständig außerhalb des Getriebegehäuses.

Bei einem automatisierten Schaltgetriebe dient die Steuereinrichtung dazu, die jeweilige Gasse auszuwählen und in der ausgewählten Gasse den gewünschten Gang einzulegen. Der hierfür vorgesehene Gangsteller ist am Getriebe angeflanscht. Die hydraulischen und mechanischen Betätigungselemente des Gangstellers befinden sich außerhalb des Getriebegehäuses. Um einen Gangwechsel durchzuführen, wird die entsprechende Schallwelle des Getriebes von außen geschaltet. Für den Gangsteller ist eine externe Druckversorgung vorgesehen. Die Verbindung vom Gangsteller zur Druckversorgung erfolgt über hydraulische Leitungen. Die Steuerleitungen sind entsprechend lang. ES ist eine große Zahl von Kontaktstellen, zum Beispiel Steck- oder Lötverbindungen, vorgesehen, die zu einer hohen Ausfallwahrscheinlichkeit bzw. zu einem hohen Ausfallpotential der Steuereinrichtung führen. Da sich die hydraulischen Bauteile außerhalb des Getriebegehäuses befinden, sind aufwendige Maßnahmen gegen Leckage und Schutzmaßnahmen gegen Beschädigung druckbeaufschlagter Komponenten notwendig, zum Beispiel ein Crash-Schutz für Ölbehälter. Ferner ist eine aufwendige Dichtungstechnik notwendig. Für die Verbindung der einzelnen Komponenten der Steuereinrichtung sind hochfeste und schwere Verbindungsleitungen notwendig. Sie sind, auch infolge der langen Leitungswege, störanfällig und erfordern teure Abschirmungsmaßnahmen zur Funkentstörung. Da die Steuereinrichtung aus einer großen Zahl von Bauteilen besteht, kann sie nur kostenaufwendig hergestellt und montiert werden. Außerdem wird durch die große Zahl von Bauteilen das Gewicht der Steuereinrichtung erhöht. Aufgrund der Vielzahl von Bauteilen ist eine optimale Bauraumausnutzung nicht möglich.

Der Erfindung liegt die Aufgabe zugrunde, die gattungsgemäße Steuereinrichtung so auszubilden, daß sie bei konstruktiv einfacher und kompakter Ausbildung eine lange Lebensdauer hat, problemlos montiert werden kann und eine allenfalls nur geringe Störanfälligkeit zeigt.

Diese Aufgabe wird bei der gattungsgemäßen Steuereinrichtung erfindungsgemäß mit den Merkmalen des Anspruches 1 gelöst.

Bei der erfindungsgemäßen Steuereinrichtung befinden sich die Magnetteile der Magnetventile im Magnetgehäuseteil, der sich außerhalb des Getriebegehäuses befindet. Auch die Elektronik der Steuereinrichtung befindet sich außerhalb des Getriebegehäuses im Magnetgehäuseteil. Dadurch werden diese empfindlichen Bauteile der Steuereinrichtung nur wenig thermisch beansprucht, so daß die erfindungsgemäße Steuereinrichtung zuverlässig arbeitet. Die Hydraulikteile der Magnetventile sind im Hydraulikgehäuseteil untergebracht, das sich zumindest teilweise im Getriebegehäuse befindet. Dadurch kann eventuell auftretendes Leckagemedium direkt in das Getriebegehäuse abfließen. Aufwendige Abdichtungen sind darum nicht erforderlich.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:
- Fig. 1: teilweise in Ansicht und teilweise im Schnitt eine erfindungsgemäße Steuereinrichtung,
- Fig. 2: einen Schnitt längs der Linie II - II in Fig. 1,
- Fig. 3: einen Schnitt längs der Linie III - III in Fig. 2,
- Fig. 4: im Schnitt eine zweite Ausführungsform einer erfindungsgemäßen Steuereinrichtung,
- Fig. 5: eine weitere Ausführungsform einer erfindungsgemäßen Steuereinrichtung,
- Fig. 6 bis 8: verschiedene Ausführungsformen von Druckspeichern der erfindungsgemäßen Steuereinrichtung, jeweils im Schnitt,
- Fig. 9: im Schnitt eine Steckverbindung zwischen einem Motor und der erfindungsgemäßen Steuereinrichtung,
- Fig. 10a bis 10c: jeweils im Halbschnitt verschiedene Schaltstellungen einer Schiebemuffe eines Getriebes,
- Fig. 11a bis 11f: bei einer anderen Ausführungsform verschiedene Schaltstellungen beim Schalten des Getriebes,
- Fig. 12: eine weitere Ausführungsform einer erfindungsgemäßen Steuereinrichtung,
- Fig. 13: in vergrößerter Darstellung eine Einzelheit der Steuereinrichtung gemäß Fig. 12,
- Fig. 14: eine Welle mit einem Aktuator der Steuereinrichtung gemäß Fig. 12 in perspektivischer Darstellung,
- Fig. 15a bis 15d: verschiedene Schattstellungen des Aktuators gemäß Fig. 14,
- Fig. 16: eine weitere Ausführungsform einer erfindungsgemäßen Steuereinrichtung,
- Fig. 17: eine weitere Ausführungsform einer erfindungsgemäßen Steuereinrichtung,
- Fig. 18: in vergrößerter Darstellung Details der Steuereinrichtung gemäß Fig. 17,
- Fig. 19: einen Schnitt längs der Linie E-E in Fig. 21,
- Fig. 20: einen Schnitt längs der Linie F-F in Fig. 21,
- Fig. 21: eine Sicht von unten auf eine weitere Ausführungsform einer erfindungsgemäßen Steuereinrichtung.

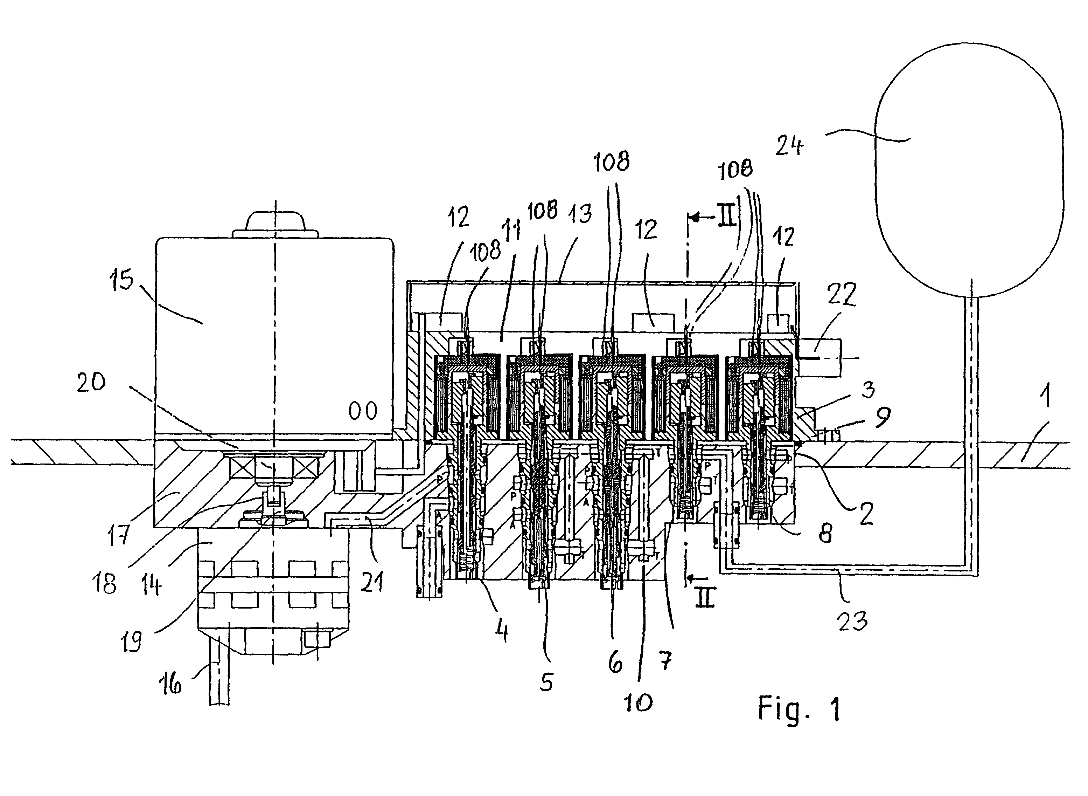

Die im folgenden beschriebene elektronisch-hydraulische Steuereinrichtung ist für automatisierte Schaltgetriebe von Fahrzeugen, vorzugsweise von Kraftfahrzeugen, vorgesehen. Die Steuereinrichtung kann allgemein für Getriebe eingesetzt werden, so auch beispielsweise für Doppelkupplungsgetriebe. In Fig. 1 ist ein Teil des Getriebegehäuses 1 dargestellt, in dem sich das (nicht dargestellte) Schaltgetriebe befindet. Das Getriebegehäuse 1 hat eine Einbauöffnung 2 für die Steuereinrichtung. Sie hat ein Magnetgehäuse 3, in dem Magnetventile 4 bis 8 untergebracht sind. Das Magnetgehäuse 3 liegt mit einem Flansch 9 auf dem Getriebegehäuse 1 auf und ist an ihm abgedichtet befestigt. Das Magnetventil 4 ist ein Kupplungsventil, mit dem eine oder mehrere Kupplungen betätigt werden können. Die Ventile 5 und 6 dienen zum Einlegen des jeweiligen Ganges des Schaltgetriebes, während die Magnetventile 7, 8 zur Auswahl der Gasse des Getriebes eingesetzt werden. Mit den Ventilen 5 bis 8 wird somit der Gangsteller 29 angesteuert. Die Magnetventile 5, 6 sind als Proportionalmagnetventile ausgebildet, während für die Magnetventile 7, 8 Schaltventile herangezogen werden. Das Ventil 4 ist ebenfalls ein Proportionalmagnetventil.

Durch die Einbauöffnung 2 des Getriebegehäuses 1 ragt die Steuereinrichtung mit einem Hydraulikgehäuse 10, das mit dem außerhalb des Getriebegehäuses 1 befindlichen Magnetgehäuse 3 abgedichtet verbunden ist. Auf dem Magnetgehäuse 3 befindet sich eine Elektronikplatte 11, auf der die zum Betrieb der Steuereinrichtung notwendigen elektrischen und/oder elektronischen Bauteile 12 untergebracht sind. Auf das Magnetgehäuse 3 ist ein Deckel 13 aufgesetzt, der die Elektronikplatte 11 mit den Bauteilen 12 abdeckt.

Die Ausbildung der Magnetventile 4 bis 8 ist bekannt, so daß sie nicht näher beschrieben werden. Je nach Stellung der verschiedenen Magnetventile wird die Kupplung betätigt bzw. im Schaltgetriebe der Gang eingelegt bzw. die jeweilige Gasse des Getriebes ausgewählt. Die Betätigung der Magnetventile 4 bis 8 erfolgt über Magnetteile. Das Hydraulikmedium wird mittels einer Pumpe 14 gefördert, die an der Unterseite eines Motors 15 angeordnet ist. Die Pumpe 14 liegt innerhalb des Getriebegehäuses 1. Der Motor 15 ragt durch die Einbauöffnung 2 des Getriebegehäuses 1 nach außen. Der größte Teil des Motors 15 liegt außerhalb des Getriebegehäuses 1. An die Pumpe 14 ist eine Leitung 16 angeschlossen, über die das Hydraulikmedium in bekannter Weise angesaugt wird. Als Hydraulikmedium wird vorteilhaft das Getriebeöl verwendet, das sich im Getriebegehäuse 1 befindet.

Das Hydraulikgehäuse 10 hat einen seitlichen Ansatz 17, der innerhalb des Getriebegehäuses 1 liegt und an dessen Unterseite die Pumpe 14 und an dessen Oberseite der Motor 15 befestigt ist. Der Gehäuseansatz 17 hat eine Durchtrittsöffnung 18 für eine Pumpenwelle 19 und eine Motorwelle 20, die innerhalb des Gehäuseansatzes 17 miteinander in bekannter Weise gekuppelt sind. Das von der Pumpe 14 geförderte Druckmedium gelangt über eine Druckleitung 21 zu den entsprechenden Magnetventilen 4 bis 8 im Hydraulikgehäuse 10. Mit den Magnetventilen 4 bis 8 wird in bekannter Weise der Zufluß des Druckmediums zu den anzusteuernden Bauteilen gesteuert.

Im Magnetgehäuse 3 sind die Magnetteile der Ventile 4 bis 8 untergebracht, vorzugsweise eingegossen, so daß sie vor Beschädigung geschützt sind. Die Ventilteile ragen aus dem Magnetgehäuse 3 in das Hydraulikgehäuse 10. Das Magnetgehäuse 3 weist vorteilhaft an der vom Motor 15 angewandten Seite einen elektrischen Anschluß 22 für die Magnetventile 4 bis 8 auf.

An das Hydraulikgehäuse 10 ist über eine Leitung 23 ein Speicher 24 für das Druckmedium angeschlossen. Bei der Ausführungsform nach den Fig. 1 bis 3 befindet sich der Speicher 24 außerhalb des Getriebegehäuses 1.

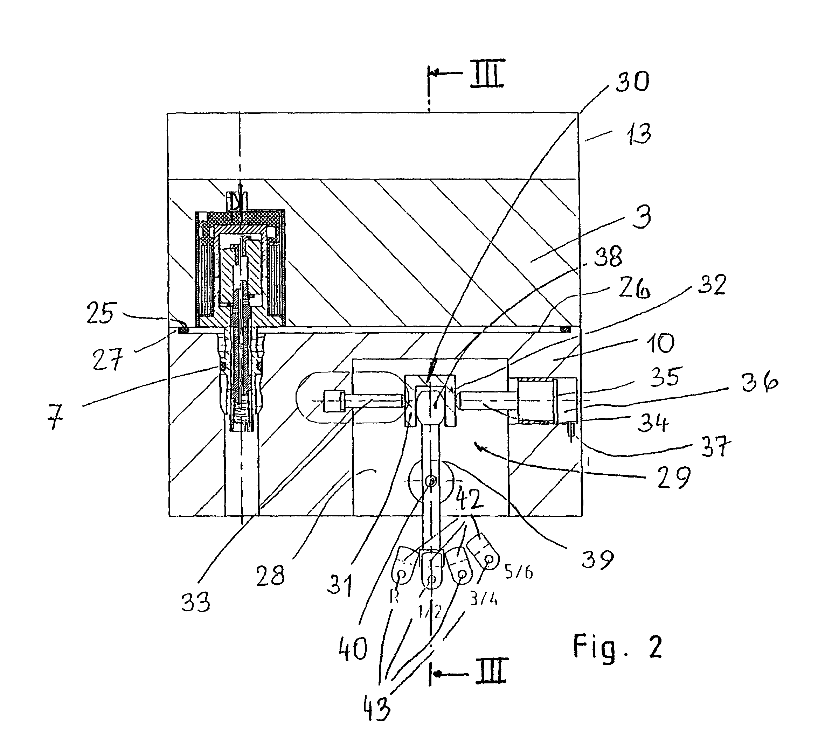

Wie Fig. 2 zeigt, liegt das Magnetgehäuse unter Zwischenlage wenigstens einer Ringdichtung 25 am Hydraulikgehäuse 10 an. Es hat an seiner dem Magnetgehäuse 3 zugewandten Seite eine Vertiefung 26, in die die Ringdichtung 25 eingelegt ist und an deren Rand sie anliegt. Das Magnetgehäuse 3 sitzt auf dem die Vertiefung 26 umgebenden Rand 27 des Hydraulikgehäuses 10 auf. Anstelle der Ringdichtung kann beispielsweise eine Silikonraupe, eine Flächendichtung oder ein Verguß der beiden Gehäuseteile verwendet werden.

Wie Fig. 2 zeigt, hat das Hydraulikgehäuse 10 einen Aufnahmeraum 28 für die den Gangsteller bildende Betätigungseinrichtung 29, mit der die Gassen des Schaltgetriebes ausgewählt und die Gänge eingelegt werden können. Die Betätigungseinrichtung 29 hat ein im Aufnahmeraum 28 liegendes U-förmiges Stellelement 30, an dessen beiden Schenkeln 31, 32 jeweils ein Betätigungselement 33, 34 angreift (Fig. 2). Das Betätigungselement 34 ist eine Kolbenstange, auf der ein Kolben 35 sitzt (Fig. 2), der in einem Zylinderraum 36 des Hydraulikgehäuses 10 geführt ist. In den Zylinderraum 36 mündet eine Leitung 37, über die Hydraulikmedium zur Beaufschlagung des Kolbens 35 zugeführt wird. Das andere Betätigungselement 33 kann ebenfalls eine Kolbenstange sein, auf der ein in einem Zylinderraum des Hydraulikgehäuses 10 vorgesehener Kolben sitzt. Er wird in diesem Fall ebenfalls mit Hydraulikmedium beaufschlagt. Es reicht aber auch aus, daß das Betätigungselement 33 unter Federkraft steht, wodurch das Betätigungselement 33 in Richtung auf das gegenüberliegende, vorzugsweise fluchtend zu ihm liegende Betätigungselement 34 belastet wird.

Die beiden Schenkel 31, 32 des Stellelementes 30 nehmen ein kalottenförmiges Ende 38 eines zweiarmigen Schalthebels 39 auf. Er ist auf einer Achse 40 gelagert, die den Aufnahmeraum 28 senkrecht zum Schalthebel 39 durchquert und mit ihren beiden Enden im Hydraulikgehäuse 10 gelagert ist. Die Achse 40 erstreckt sich parallel zur Längsachse des U-förmigen Stellelementes 30.

Das nach unten aus dem Aufnahmeraum 28 ragende Ende des Schalthebels 39 trägt ein Kupplungsstück 41, mit dem der Schalthebel 39 mit Schaltfingern 42 in Eingriff gebracht werden kann, die auf parallel zueinander liegenden Schaltwellen 43 des Schaltgetriebes drehfest sitzen.

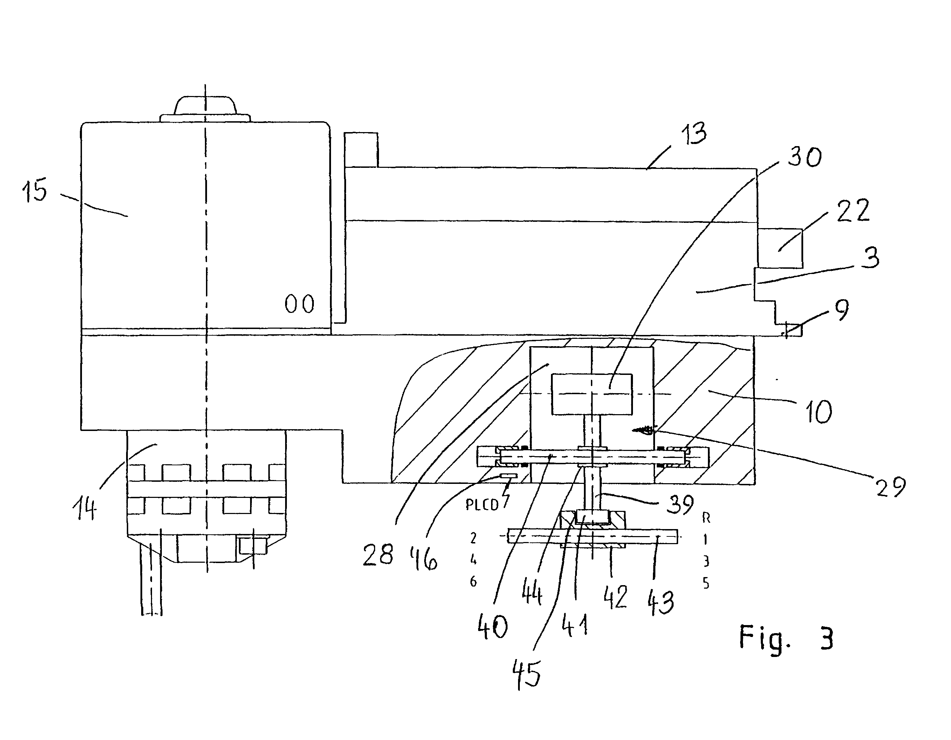

Der Schalthebel 39 sitzt mit einer Buchse 44 (Fig. 3) axial verschiebbar auf der Achse 40. Zum Verschieben sind zwei (nicht dargestellte) Stellglieder, vorzugsweise druckbeaufschlagte Kolben, vorgesehen, die an den in Fig. 3 rechten und linken Stirnseiten des Stellelementes 30 angreifen. Je nach Beaufschlagung dieser Stellglieder wird das Stellelement 30 und damit auch der Schalthebel 39 auf der Achse 40 in der gewünschten Richtung verschoben. Da das Kupplungsstück 41 des Schalthebels 39 in den ausgewählten Schaltfinger 42 der entsprechenden Schaltwelle 43 eingreift, wird hierbei auch die Schaltwelle 43 in der gewünschten Richtung verschoben.

Zunächst wird das U-förmige Stellelement 30 mit dem jeweiligen Betätigungselement 33 oder 44 um die Achse 40 geschwenkt, wodurch das Kupplungsstück 41 in die entsprechende Kupplungsaufnahme 45 (Fig. 3) des Schaltfingers 42 eingreift. Wie Fig. 2 zeigt, hat das Getriebe vier Schaltwellen 43, auf denen jeweils ein Schattfinger 42 sitzt. Mit dem in Fig. 2 linken Schaltfinger 42 wird die Gasse für den Rückwärtsgang R mit den nachfolgenden Schaltfingern die Gasse für die Gänge 1, 2; 3, 4 und 5, 6 ausgewählt. Der Schalthebel 39 wird hierbei in gewünschtem Maße um die Achse 40 geschwenkt, damit sein Kupplungsstück 41 in Eingriff mit dem gewünschten Schaltfinger 42 gelangt. Sobald die Gasse des Schaltgetriebes ausgewählt ist, wird das Stellelement 30 durch die (nicht dargestellten) Stellglieder verschoben, so daß durch Verschieben der ausgewählten Schaltwelle 43 der in der ausgewählten Gasse befindliche Gang eingelegt wird. Wird bei der Darstellung gemäß Fig. 3 die Schaltwelle 43 nach links verschoben, dann kann je nach gewählter Gasse der zweite, der vierte oder der sechste Gang eingelegt werden. Wird die Schaltwelle 43 in Fig. 3 nach rechts verschoben, dann kann je nach ausgewählter Gasse der Rückwärtsgang R, der erste, der dritte und der fünfte Gang eingelegt werden. Eine solche Betätigungseinrichtung 29 ist an sich bekannt und ist darum nur in ihren wesentlichen Funktionen beschrieben worden.

Um den erforderlichen Schwenkweg des Schalthebels 39 bei der Auswahl der Gasse und den erforderlichen Verschiebeweg des Schalthebels 39 zum Einlegen des gewünschten Ganges zu erfassen, ist der Achse 40 mindestens ein entsprechender Sensor 46, vorzugsweise ein PLCD-Sensor, zugeordnet, der im Hydraulikgehäuse 10 untergebracht ist (Fig. 3).

Bei der Ausführungsform nach den Fig. 1 bis 3 sind der Motor 15, die Pumpe 14 und die Steuereinrichtung als Einheit ausgebildet. Die Magnetventile 4 bis 8 sind im Bereich unterhalb der die elektronischen Bauteile 12 tragenden Elektronikplatte 11 in Reihe hintereinander angeordnet. Die Magnetteile der Ventile 4 bis 8 sind in dem außerhalb des Getriebegehäuses 1 liegenden Magnetgehäuse 3 untergebracht, während die Ventilteile innerhalb des Getriebegehäuses 1 angeordnet sind. Da sich die Elektronik 11, 12 und die Magnete der Ventile 4 bis 8 außerhalb des Getriebegehäuses 1 befinden, werden sie nur wenig temperaturbelastet. Die Lebensdauer der Magnetventile 4 bis 8 wird dadurch erhöht.

Die Betätigungseinrichtung 29 sitzt platzsparend in der beschriebenen Weise innerhalb des Hydraulikgehäuses 10. Auch die zur Erfassung der jeweiligen Schaltstellung vorgesehenen Sensoren 46 sind platzsparend im Hydraulikgehäuse 10 untergebracht. Die Pumpe 14 und der Motor 15 bilden zusammen mit der Steuereinrichtung eine Baueinheit, die vorgefertigt werden kann und sich dann einfach in das Getriebegehäuse 1 einsetzen läßt.

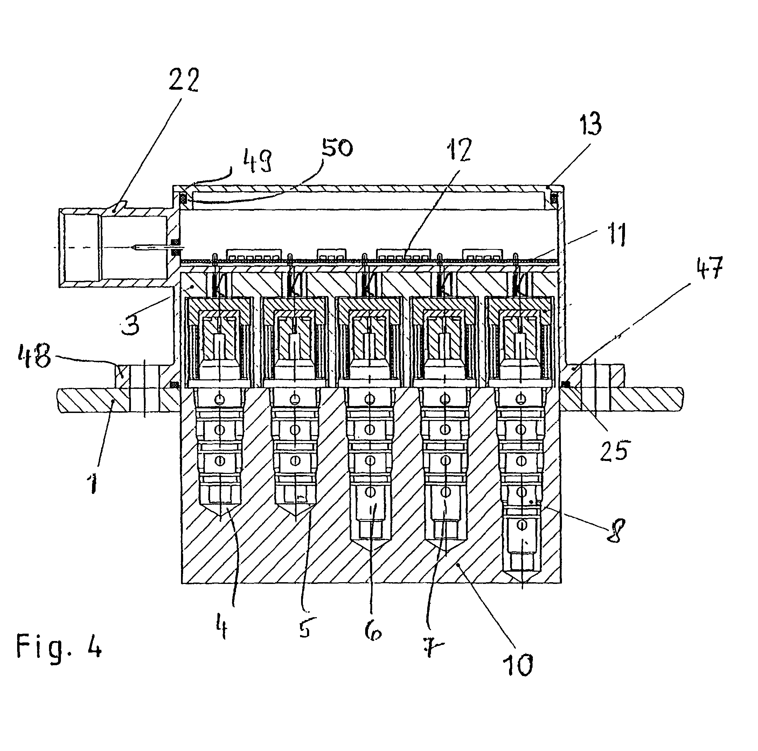

Fig. 4 zeigt eine Ausführungsform, bei welcher ebenfalls das Hydraulikgehäuse 10 mit den Ventilteilen der Magnetventile innerhalb des Getriebegehäuses 1 liegt. Auf dem Hydraulikgehäuse 10 sitzt unter Zwischenlage der Ringdichtung 25 das Magnetgehäuse 3, in dem entsprechend der vorigen Ausführungsform die Magnetteile der Magnetventile 4 bis 8 untergebracht sind. Das Magnetgehäuse 3 ist in einem Kunststoffgehäuse 47 untergebracht, das mit einem umlaufenden Flansch 48 auf dem Getriebegehäuse 1 aufliegt und mit ihm beispielsweise verschraubt ist. Das Kunststoffgehäuse 47 umgibt vollständig das Magnetgehäuse 3. Auf das Kunststoffgehäuse 47 ist der Deckel 13 aufgesetzt. Er weist am Umfang eine Ringdichtung 49 auf, die in einer am Rand umlaufenden Nut 50 des Kunststoffgehäuses 47 untergebracht ist. Die Ringdichtung 49 liegt an der Innenwand des über die Elektronikplatte 11 mit den elektrischen/elektronischen Bauteilen überstehenden Teil des Kunststoffgehäuses 47 dichtend an.

Beim vorigen Ausführungsbeispiel ist lediglich der Deckel 13 aus Kunststoff hergestellt, der auf das Magnetgehäuse 3 aufgesetzt ist. Bei der Ausführungsform nach Fig. 4 umgibt das Kunststoffgehäuse 47 vollständig das Magnetgehäuse 3.

Das Kunststoffgehäuse 47 ist an einer Seitenwand mit dem Steckeranschluß 22 für die Signalleitungen und für die Spannungsversorgung der Steuereinrichtung versehen.

Im übrigen ist diese Steuereinrichtung gleich ausgebildet wie die vorige Ausführungsform. Das die Magnetteile der Magnetventile 4 bis 8 enthaltende Gehäuse 3 liegt außerhalb des Getriebegehäuses 1, so daß die empfindlichen Magnetteile nur wenig temperaturbelastet sind.

Die Ventilteile der Magnetventile 4 bis 8 sitzen platzsparend im Getriebegehäuse 1.

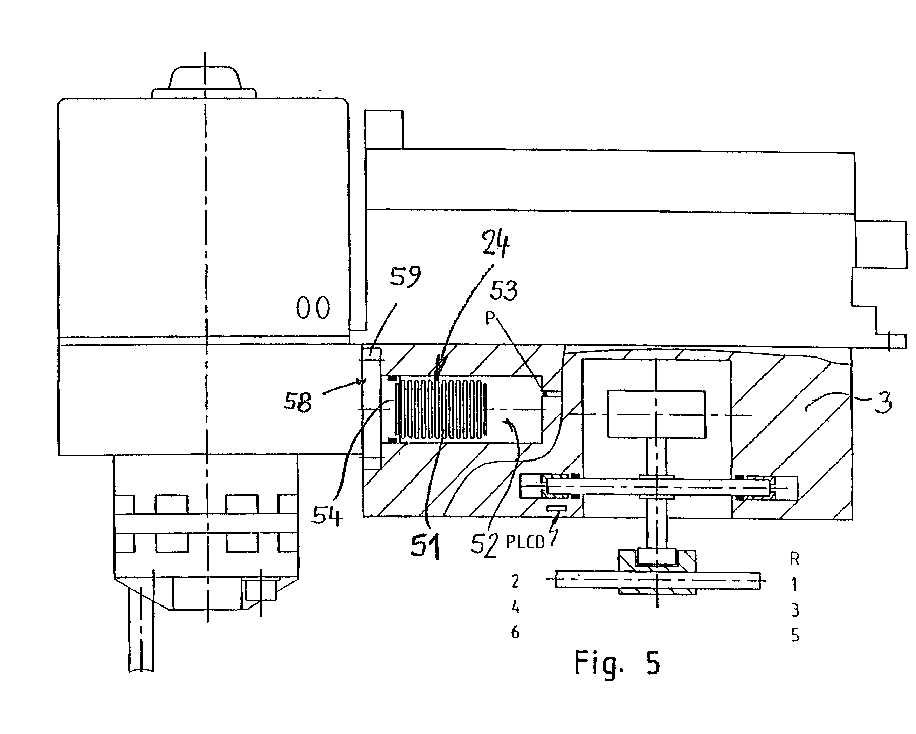

Fig. 5 zeigt eine Ausführungsform, die im wesentlichen gleich ausgebildet ist wie das Ausführungsbeispiel nach den Fig. 1 bis 3. Im Unterschied zu dieser Ausführungsform ist der Druckspeicher 24 nicht außerhalb der Steuereinrichtung vorgesehen, sondern in die Steuereinrichtung integriert. Der Speicher 24 ist im Magnetgehäuse 3 untergebracht, das in der Einbaulage der Steuereinrichtung im Getriebegehäuse liegt. Als Speicher 24 dient ein luftgefülltes Balgelement 51, das in einem Aufnahmeraum 52 des Magnetgehäuses 3 untergebracht ist. In den Aufnahmeraum 52 mündet eine Druckbohrung 53 für das Druckmedium. Das Balgelement 51 stützt sich am Boden 54 des Aufnahmeraumes 52 ab. Je nach dem Druck, unter dem das Hydraulikmedium im Aufnahmeraum 52 steht, wird das Balgelement 51 mehr oder weniger zusammengedrückt. Das Balgelement 51 seinerseits übt einen Druck auf das im Aufnahmeraum 52 befindliche Hydraulikmedium aus.

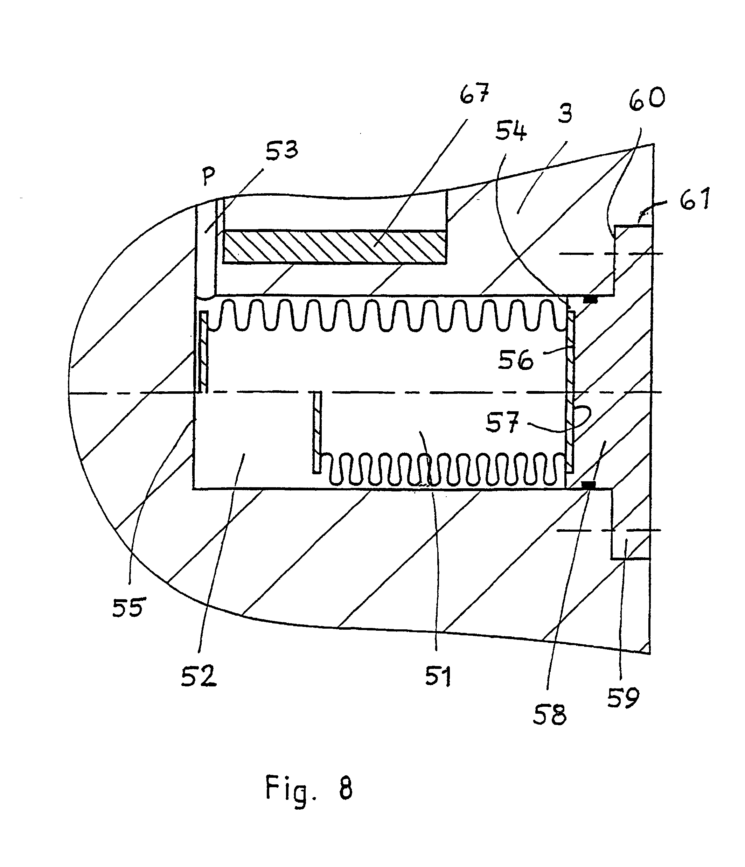

Fig. 8 zeigt in vergrößerter Darstellung das Balgelement 51. In der oberen Hälfte ist das Balgelement 51 in einer Endlage dargestellt, in der es mit seinem freien Ende an der dem Boden 54 gegenüberliegenden Stirnwand 55 des Aufnahmeraumes 52 anliegt. Das Balgelement 51 hat eine Bodenplatte 56, mit der es in eine Vertiefung 57 eines Einsatzstückes 58 eingesetzt ist. Es hat einen radial nach außen ragenden Flansch 59, mit dem das Einsatzstück 58 am Boden 60 einer Vertiefung 61 des Magnetgehäuses 3 befestigt ist. Die Stirnseite des Einsatzstückes 58 bildet den Boden 54 des Aufnahmeraumes 52.

Da der Druckspeicher 24 innerhalb der Steuereinrichtung untergebracht ist, ergibt sich eine kompakte Ausbildung. Da das Magnetgehäuse 3, in dem sich der Druckspeicher 24 befindet, innerhalb des Getriebegehäuses 1 liegt, kann Leckageöl des Druckspeichers 24 direkt in das Getriebegehäuse 1 abfließen.

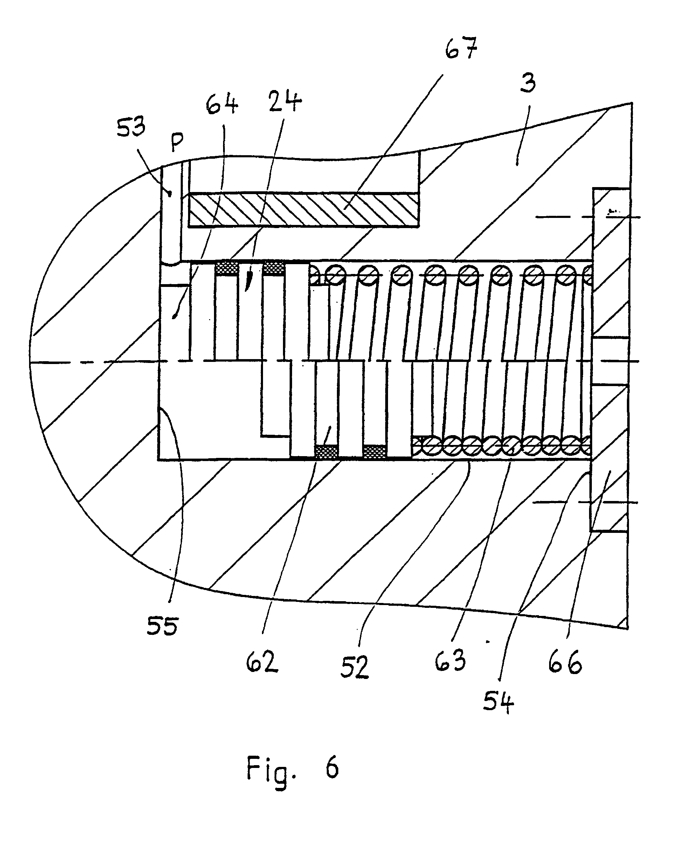

Fig. 6 zeigt einen Druckspeicher 24, der einen Kolben 62 aufweist, der abgedichtet an der Innenwandung des Aufnahmeraumes 52 im Magnetgehäuse 3 gegen Federkraft verschiebbar gelagert ist. An der von der Druckbohrung 53 abgewandten Seite des Kolbens 62 greift wenigstens eine Schraubendruckfeder 63 an, die sich am Boden 54 des Aufnahmeraumes 52 abstützt. Der Kolben 62 ist an beiden Stirnseiten mit jeweils einem im Durchmesser verkleinerten zylindrischen Ansatz 64 und 65 versehen. Mit dem Ansatz 64 liegt der Kolben 62 in unbelasteten Zustand an der Stirnwand 55 des Aufnahmeraumes 52 unter der Kraft der Feder 63 an. Da der Ansatz 64 kleineren Durchmesser als der Kolben 62 hat, kann das über die Druckbohrung 53 einströmende Medium am Kolben 62 angreifen und ihn gegen die Kraft der Druckfeder 63 verschieben. In der oberen Hälfte von Fig. 6 ist der Kolben 62 in seiner Endlage dargestellt, in der er mit dem Ansatz 64 an der Stirnwand 55 des Aufnahmeraumes 52 anliegt. In der unteren Hälfte ist der Kolben 62 unter dem Druck des über die Bohrung 53 unter Druck zuströmenden Hydraulikmediums gegen die Kraft der Druckfeder 63 verschoben.

Der Boden 54 des Aufnahmeraumes 52 ist an einer Abschlußplatte 66 vorgesehen, mit der der Aufnahmeraum 52 nach dem Einbau des Kolbens 62 und der Druckfeder 63 verschlossen wird.

Da auch bei dieser Ausführungsform der Kolben 62 im Magnetgehäuse 3 untergebracht ist, das seinerseits im Getriebegehäuse 1 liegt, kann Leckageöl direkt in das Getriebegehäuse 1 abfließen. Der Kotbenspeicherladezustand kann einfach und kostengünstig über eine Wegsensorik 67 erfaßt werden. Sie weist einen Wegsensor auf, mit dem die Lage des Kolbens 62 innerhalb des Aufnahmeraumes 52 erfaßt werden kann. Je nach Beladezustand des Speichers 24 nimmt der Kolben 72 unterschiedliche Lagen im Aufnahmeraum 52 ein. Als Wegsensorik können in das Magnetgehäuse 3 eingesetzt PLCDs verwendet werden. Zur Bestimmung der Lage des Kolbens 62 und damit des Speicherladezustandes kann auch eine Kolbenhúbsensorik herangezogen werden, die ebenfalls Aussagen über die Lage des Kolbens 62 im Aufnahmeraum 52 machen kann. Je nach Anwendungsfall kann es auch ausreichend sein, die Endlage des Kolbens 62 (obere Hälfte in Fig. 6) oder bestimmte Positionen des Kolbens 62 im Aufnahmeraum 52 abzufragen. Da für die Steuerung der Druck des Hydraulikmediums eine interessante Größe ist, kann der Druck des Hydraulikmediums aber auch über einen Drucksensor bestimmt werden.

Bei der Ausführungsform gemäß Fig. 4 steht der Kolben 62 nicht unter der Kraft einer Schraubendruckfeder, sondern von mehreren Tellerfedern 68, die abwechselnd gegensinnig im Aufnahmeraum 52 des Magnetgehäuses 3 untergebracht sind. Im übrigen ist dieser Druckspeicher 24, bis auf den fehlenden federseitigen Einsatz, gleich ausgebildet wie das Ausführungsbeispiel nach Fig. 6.

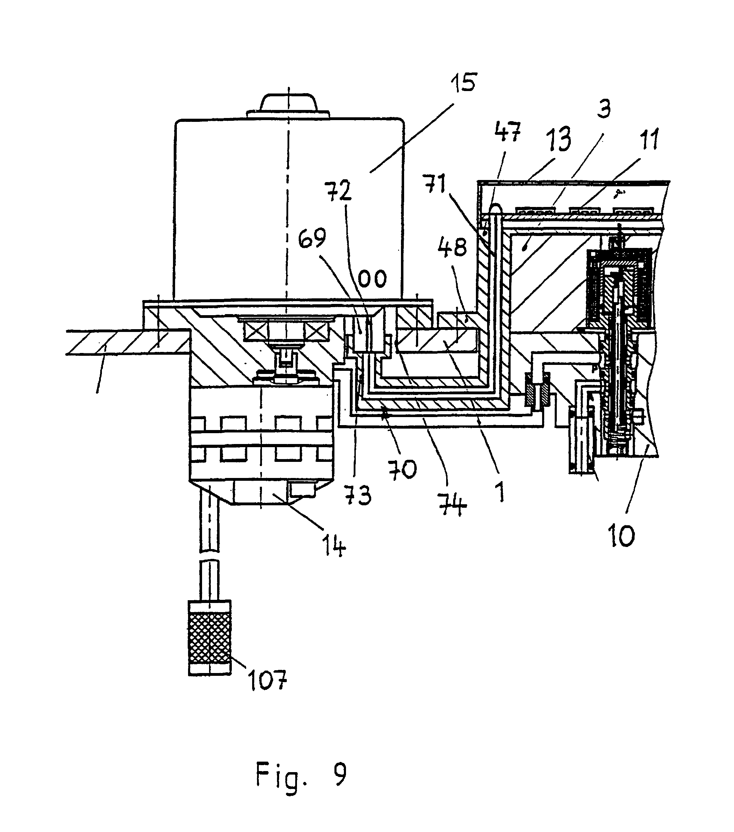

Fig. 9 zeigt eine Ausführungsform, bei der die Steuereinrichtung über eine Steckverbindung mit dem Motor 15 verbunden ist. Die Pumpe 14 ist unmittelbar mit dem Motor 15 verbunden. Im Bereich neben der Pumpe 14 ist der Motor 15 mit einem nach unten ragenden Steckansatz 69 versehen, auf dem ein Steckerarm 70 der Steuereinrichtung gesteckt wird.

Die Steuereinrichtung hat das Kunststoffgehäuse 47, welches das Magnetgehäuse 3 sowie einen Teil des Hydraulikgehäuses 10 umgibt. Das Kunststoffgehäuse 47 ragt entsprechend der Ausführungsform gemäß Fig. 4 über die Elektronikplatine 11. Die Strom- und Spannungsversorgung der Leiterplatte 11 erfolgt durch mindestens eine Leitung 71, die durch den Steckerarm 70 verläuft und im angekuppelten Zustand mit einer entsprechenden Leitung 72 im Steckansatz 69 des Motors 15 elektrisch verbunden wird. Der Steckerarm 70 hat U-Form und verläuft innerhalb des Getriebegehäuses 1. Das Kunststoffgehäuse 47 sitzt mit seinem Flansch 48 auf dem Getriebegehäuse 1, mit dem es lösbar verbunden ist. Auch der Motor 15 sitzt auf dem Getriebegehäuse 1. Die Pumpe 14 befindet sich innerhalb des Getriebegehäuses 1.

In der Einbaulage ragt der Steckerarm 70 mit einem Schenkel 73 durch eine Öffnung 74 im Getriebegehäuse 1. Der Motor 15 mit der Pumpe 14 kann durch einen einfachen Steckvorgang während des Einbaues in das Getriebegehäuse 1 mit dem Steckerarm 70 gekuppelt werden.

Bei dieser Ausführungsform sind die Pumpe 14 und der Motor 15 von der Steuereinrichtung getrennte Bauteile, die zum Einbau in das Kraftfahrzeug miteinander steckverbunden werden.

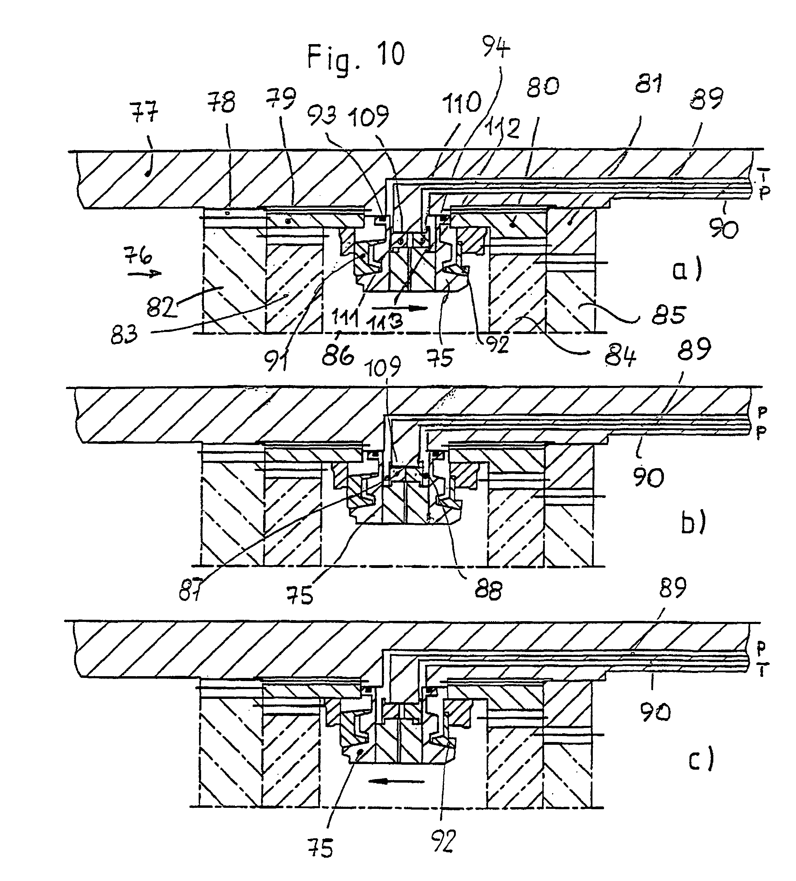

Fig. 10 zeigt eine Ausführungsform, bei der Schaltwellen zum Schalten des Schaltgetriebes und die zur Betätigung der Schaltwellen bei den vorigen Ausführungsformen vorgesehene Betätigungseinrichtung 29 nicht mehr vorgesehen sind. Bei dieser Ausführungsform wird eine Schiebemuffe 75 des Schaltgetriebes 76 hydraulisch verstellt. Die Schiebemuffe 75 sitzt auf einer Getriebewelle 77, auf der in bekannter Weise Getrieberäder 78 bis 81 unterschiedlicher Größe drehfest sitzen. Sie kämmen mit Getrieberädern 82 bis 85, die auf einer weiteren, parallel zur Getriebewelle 77 liegenden Welle 86 drehfest sitzen. Die ringförmige Schiebemuffe 75 weist zwei voneinander getrennte ringförmige Druckräume 87, 88 (Fig. 10b) auf, die mit jeweils einer Bohrung 89, 90 verbunden sind, die über eine (nicht dargestellte) Ventilanordnung an eine Druckmediumquelle angeschlossen sind. Die beiden Bohrungen 89, 90 sind in der Getriebewelle 77 vorgesehen. In jedem Druckraum 87, 88 ist ein ringförmiger Hilfskolben 109, 110 untergebracht. An den voneinander abgewandten Enden der koaxial zueinander liegenden Hilfskolben 109, 110 ist jeweils ein radial nach außen gerichteter Flansch 111, 112 vorgesehen, der als Anschlag für den jeweiligen Hilfskolben 109, 110 dient.

Die Schiebemuffe 75 ist zwischen zwei Synchronisierringen 91 und 92 verschiebbar, die auf den Getrieberädern 79 und 80 sitzen.

Fig. 10a zeigt die Schiebemuffe 75 in einer Stellung, in der ein Gang des Schaltgetriebes eingelegt ist. Die Ventilanordnung ist so geschaltet, daß das Druckmedium über die Bohrung 90 unter Druck in den Druckraum 87 zugeführt wird. Dadurch wird der Hilfskolben 110 in Fig. 10a nach links verschoben, bis er mit seinem Flansch 112 an einer schulterartigen Gegenfläche 113 der Schiebemuffe 75 anschlägt. Die andere Bohrung 89 ist zum Tank T hin entlastet., so daß die Schiebemuffe 75 aus ihrer Mittelstellung (Fig. 10b) nach links verschoben wird und sie in Eingriff mit dem Synchronisierring 91 gelangt. Er wird in bekannter Weise relativ zum Getrieberad 79 verschoben.

Um die Schiebemuffe 75 aus der Mittelstellung gemäß Fig. 10b nach rechts in die in Fig. 10c dargestellte Lage zu verschieben, wird die Ventilanordnung so umgeschaltet, daß das Hydraulikmedium in der Bohrung 89 unter Druck gesetzt wird, während die Bohrung 90 zum Tank T hin entlastet wird. Dadurch wird der Hilfskolben 109 im Druckraum 87 durch das unter Druck stehende Hydraulikmedium nach rechts verschoben, bis er mit seinem Flansch 111 an einer schulterartigen Gegenfläche 114 der Schiebemuffe 75 anschlägt. Sie wird dann nach rechts in die in fig. 10c dargestellte Lage verschoben, in der sie mit dem Synchronisierring 92 zusammenwirkt. Er wird relativ zum Getrieberad 80 verschoben. In diesem Fall ist ein anderer Gang als in der Stellung gemäß Fig. 10a eingelegt.

Um die Schiebemuffe 75 in die Mittelstellung zu bringen (Fig. 10b), in der sie mit keinem der beiden Synchronisierringe 91, 92 antriebsverbunden ist, wird die Ventilanordnung so geschaltet, daß das Hydraulikmedium in beiden Bohrungen 89, 90 unter Druck gesetzt wird. Dadurch werden die beiden Hilfskolben 109, 110, die gleich ausgebildet, aber spiegelsymmetrisch zueinander angeordnet sind, mit Hydraulikmedium beaufschlagt. Sie liegen dann mit ihren Flanschen 111, 112 an den Gegenflächen 113, 114 der Schiebemuffe 75 an. Auf diese Weise ist die Schiebemuffe 75 zuverlässig in ihrer Mittelstellung gemäß Fig. 10b gehalten.

Bei dieser Ausführungsform ist die Steuereinrichtung vollständig in das Getriebe integriert. Der Gangwechsel erfolgt in der beschriebenen Weise über die Ansteuerung der entsprechenden Schalt- bzw. Schiebemuffen 75. Die einzelnen Getriebewellen sind entsprechend der Getriebewelle 77 gemäß Fig. 10 ausgebildet, so daß über ihre Bohrungen das Druckmedium zum Verschieben der Schaltmuffen 75 zugeführt werden kann. Um eine einwandfreie Positionsbestimmung der Schiebemuffen 75 zu gewährleisten, sind an der Getriebewelle 77 Sensoren 93, 94 vorgesehen, mit denen die drei Lagen der Schiebemuffe bestimmt werden können. Die Ventile der Steuereinrichtung sind entsprechend den vorigen Ausführungsformen im Magnetgehäuse 3 sowie im Hydraulikgehäuse 10 untergebracht.

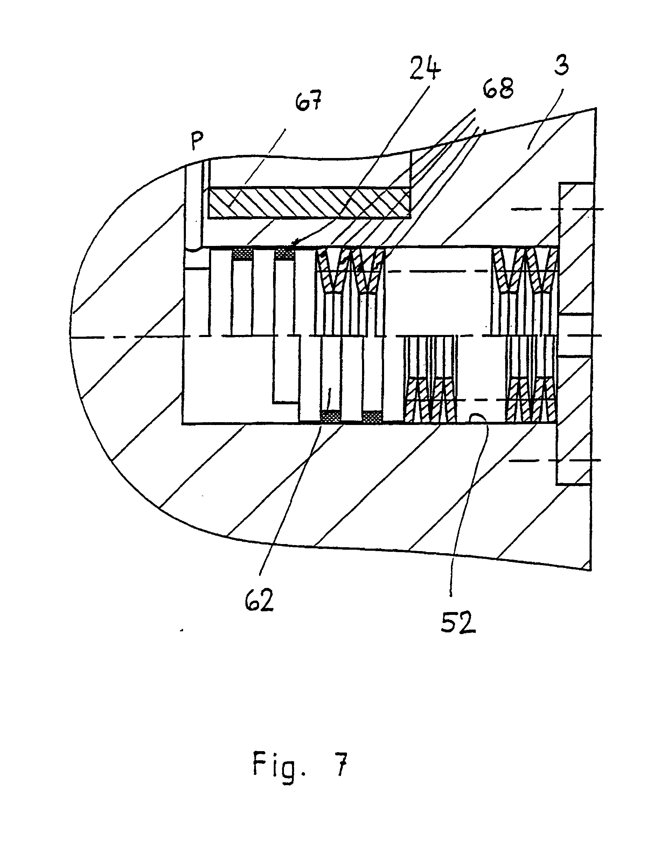

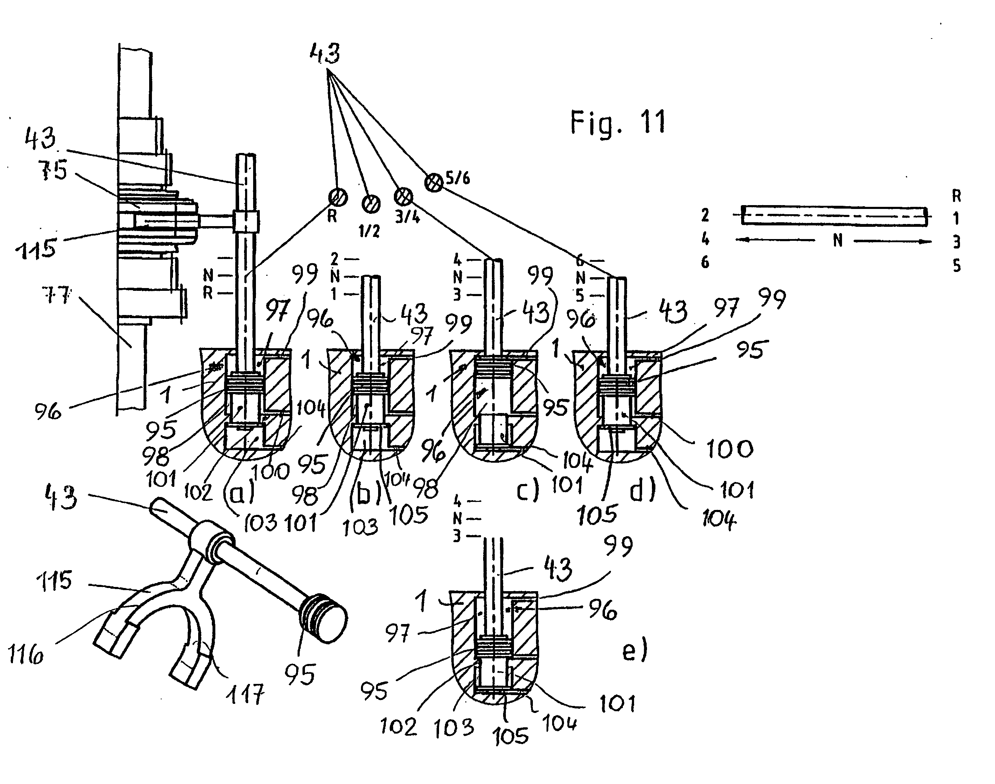

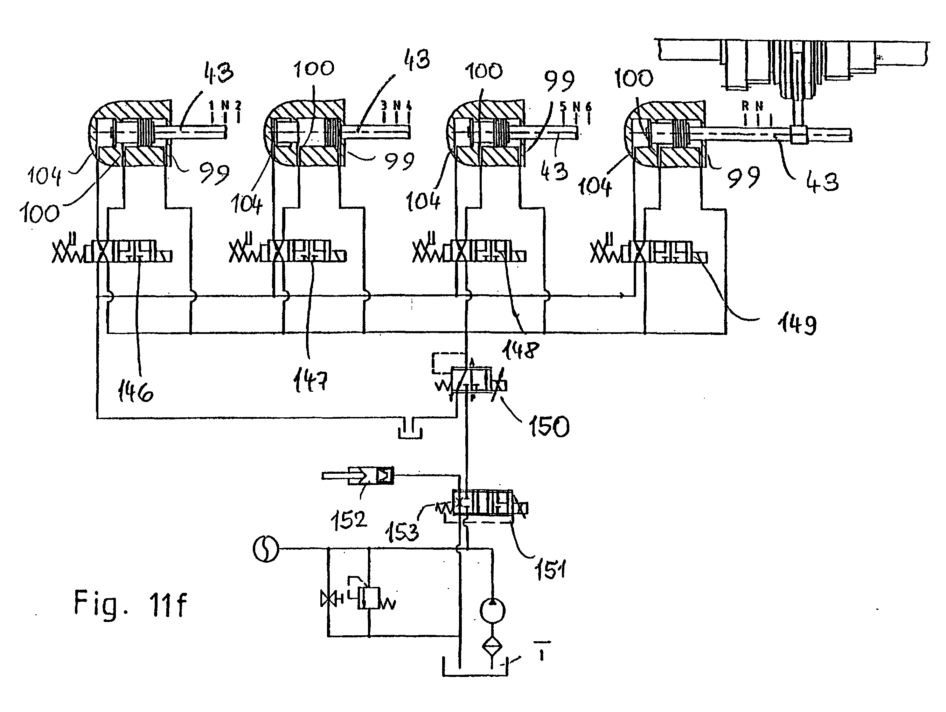

Fig. 11 zeigt eine Ausführungsform, bei der das Schaltgetriebe mit den Schaltwellen 43 versehen ist, die jedoch im Unterschied zur Ausführungsform nach den Fig. 1 bis 9 direkt hydraulisch angesteuert werden. Damit entfällt bei dieser Ausführungsform die Betätigungseinrichtung 29, mit der das Kupplungsstück 41 auf dem Schalthebel 39 mit Schaltfingern 42 auf den verschiedenen Schaltwellen 43 in Eingriff gebracht wird. Auf den verschiedenen Schaltwellen 43 sitzt jeweils ein Kolben 95, der abgedichtet in jeweils einem Zylinderraum 96 des Getriebegehäuses 1 verschiebbar ist. Die Kolben 95 trennen die Zylinderräume 96 in zwei Druckräume 97, 98, in die jeweils eine Druckleitung 99, 100 mündet. Über diese Druckleitungen wird Druckmedium zugeführt, um den Kolben 95 und damit die entsprechende Schaltwelle 43 zu verschieben.

Jedem Kolben 95 ist ein als Kolben ausgebildeter Anschlag 101 zugeordnet, der durch eine Zwischenwand 102 ragt, die den Druckraum 98 von einem Druckraum 103 trennt. In die Druckräume 103 mündet eine weitere Druckleitung 104, über die ein Druckmedium zugeführt werden kann. Jeder Kolben 101 hat an seinem innerhalb des Druckraumes 103 liegenden Ende einen radial überstehenden Flansch 105, mit dem die Kolben 101 in einer Endlage an den Zwischenwänden 102 anliegen (Fig. 11a bis 11d).

Wie Fig. 11f zeigt, sind die jeder Schaltwelle 43 zugeordneten Druckleitungen 99, 100, 104 durch jeweils ein Magnetventil 146 bis 149 steuerbar. Den Magnetventilen 146 bis 149 ist ein Druckregelventil 150 vorgeschaltet. Ihm ist ein Kupplungsventil 151 vorgeschaltet, mit dem der Zufluß des Hydraulikmediums zum Kupplungszylinder 152 gesteuert wird. Er ist über eine Drossel 153 ständig mit dem Tank T verbunden, so daß das Hydraulikmedium nach dem Kupplungsvorgang zum Tank auch dann zurückströmen kann, wenn das Kupplungsventil 151 geschlossen ist.

Fig. 11a zeigt den Fall, daß die Schaltwelle 43 für den Rückwärtsgang R in der Neutralstellung N gehalten wird. Hierzu wird Druckmedium über die Druckleitung 104 in den Druckraum 103 geleitet, so daß der Kolben 101 unter der Kraft des Druckmediums mit seinem Flansch 105 an der Zwischenwand 102 anliegt. Der Kolben 95 steht unter der Kraft des im Druckraum 97 befindlichen Druckmediums, das über die Druckbohrung 99 unter Druck gesetzt wird. Dadurch liegt der Kolben 95 unter der Kraft dieses Druckmediums am Kolben 101 an. Da die vom Druckmedium im Druckraum 97 beaufschlagte Fläche des Kolbens 95 kleiner ist als die vom Druckmedium im Druckraum 103 beaufschlagte Fläche des Kolbens 101, wird der Kolben 95 und damit die Schaltwelle 43 in der in Fig. 11a gezeigten Neutralstellung N zuverlässig gehalten. Auf der Schaltwelle 43 sitzt axial fest eine Schaltgabel 115, deren beide Gabelschenkel 116, 117 mit der Schaltmuffe 75 in Eingriff sind. Sie sitzt auf der Getriebewelle 77 des Schaltgetriebes. Auf diese Weise sind sämtliche Schaltwellen 43 über Schaltgabeln 115 mit den Schiebemuffen 75 auf den entsprechenden Getriebewellen 77 verbunden.

Soll der Rückwärtsgang R eingelegt werden, dann wird lediglich die Druckleitung 104 durch das Magnetventil 149 (Fig. 11f) zum Tank hin entlastet, so daß der Kolben 101 durch den Kolben 95 nach unten verschoben wird, bis der Kolben 101 am Boden des Druckraumes 103 anliegt. Da die Schaltgabel 115 fest auf der Schaltwelle 43 sitzt, wird beim Verschieben des Kolbens 95 und damit der Schaltwelle 75 über die Schaltgabel 115 die Schaltmuffe 75 in der anhand von Fig. 10 beschriebenen Weise auf der Getriebewelle 77 verschoben. Das Druckmedium im Druckraum 97 wird weiterhin mit Druck beaufschlagt, so daß der Kolben 95 fest gegen den Kolben 101 gedrückt wird. Die Druckbohrung 100 ist sowohl in der Neutralstellung N als auch beim Einlegen des Rückwärtsganges R druckentlastet. Soll aus dem Rückwärtsgang R in die Neutralstellung zurückgeschaltet werden, wird das Druckmedium im Druckraum 103 durch Umschalten des Magnetventils 149 wieder unter Druck gesetzt, wodurch infolge der beschriebenen unterschiedlichen Kolbenflächen der Kolben 103 in die in Fig. 11a dargestellte Lage zurückgefahren wird. Hierbei wird der Kolben 95 und damit die Schaltwelle 43 zurückgeschoben, die über die Schaltgabel 115 die Schiebemuffe 75 in die entsprechende Lage verschiebt. Das im Druckraum 97 befindliche Druckmedium bleibt hierbei ständig unter Druck.

Fig. 11b zeigt die Schaltwelle 43, die für den ersten und zweiten Gang des Schaltgetriebes vorgesehen ist. Die Schaltwelle 43 nimmt die Neutralstellung N ein. Hierzu ist das im Druckraum 97 befindliche Druckmedium unter Druck gesetzt. Auch das im Druckraum 103 befindliche Druckmedium steht unter Druck. Die Druckbohrung 100 ist zum Tank hin entlastet. Soll der zweite Gang eingelegt werden, dann wird über die Druckbohrung 100 das im Druckraum 98 befindliche Druckmedium durch Schalten des Magnetventils 146 unter Druck gesetzt, während die Druckbohrung 99 zum Tank hin entlastet wird. Dadurch wird der Kolben 95 und damit auch die Schaltwelle 43 in Fig. 11b nach oben verschoben, bis der Kolben 95 am Boden des Druckraumes 97 anschlägt. Das Druckmedium im Druckraum 103 wird weiterhin unter Druck gesetzt. Über die Schaltgabel 115 wird die Schattmuffe 75 in die erforderliche Richtung auf der entsprechenden Getriebewelle 77 verschoben.

Soll aus dem zweiten Gang in die Neutralstellung N zurückgeschaltet werden, wird durch Umschalten des Magnetventils 146 über die Druckbohrung 99 das Druckmedium im Druckraum 97 unter Druck gesetzt, während die Druckbohrung 100 zum Tank hin entlastet wird. Das Druckmedium im Druckraum 103 bleibt weiterhin unter Druck, so daß der Kolben 95 mit der Schaltwelle 43 in die in Fig. 11b dargestellte Neutralstellung N zurückfährt und über die Schaltgabel die Schiebemuffe 75 auf der entsprechenden Getriebewelle 77 verschiebt.

Soll in den ersten Gang geschaltet werden, dann wird lediglich die Druckbohrung 104 durch Umschalten des Magnetventils 146 zum Tank hin entlastet, so daß der Kolben 101 durch den unter Druck stehenden Kolben 95 nach unten verschoben wird, bis der Kolben 101 am Boden des Druckraumes 103 anliegt. Zum Zurückschalten in die Neutralstellung N wird über die Druckbohrung 104 das Druckmedium im Druckraum 103 unter Druck gesetzt, wodurch der Kolben 101 zurückgefahren wird und den Kolben 95 mitnimmt. Das im Druckraum 97 befindliche Druckmedium steht hierbei weiterhin unter Druck. Aufgrund der beschriebenen unterschiedlichen, mit Druckmedium beaufschlagten Kolbenflächen wird in der beschriebenen Weise der Kolben 95 zurückgefahren.

Fig. 11c zeigt die Schaltwelle 43 für den dritten und vierten Gang des Schaltgetriebes. Die Schaltwelle nimmt die zum Einlegen des vierten Ganges notwendige Lage ein. Hierbei ist die Druckbohrung 99 über das entsprechend geschaltete Magnetventil 147 zum Tank hin entlastet, während über die Druckbohrung 100 das im Druckraum 96 befindliche Druckmedium unter Druck gesetzt wird, wodurch der Kolben 95 mit der Schaltwelle 43 in Fig. 11c nach oben verschoben wird, bis der Kolben 95 am Boden des Druckraumes 97 anliegt. Das im Druckraum 103 befindliche Druckmedium wird weiterhin unter Druck gesetzt. Die beaufschlagte Kolbenfläche im Druckraum 103 ist größer als die gegenüberliegende Kolbenfläche 106, so daß der Kolben 101 in seiner Anschlagstellung an der Zwischenwand 102 bleibt. Über die Schaltgabel 115 wird die Schiebemuffe 75 auf der entsprechenden Getriebewelle 77 verschoben.

Um aus dem vierten Gang in die Neutratstellung N zurückzuschalten, wird durch Umschalten des Magnetventils 147 die Druckbohrung 100 zum Tank hin entlastet und über die Druckbohrung 99 das Druckmedium im Druckraum 97 unter Druck gesetzt. Dadurch wird der Kolben 95 zurückgefahren, bis er am Kolben 101 anliegt, der unter dem Druck des im Druckraum 103 befindlichen Druckmediums steht.

Soll der dritte Gang eingelegt werden, wird das Magnetventil 147 so umgeschaltet, daß der Druckraum 103 entlastet wird, so daß, wie dies anhand von Fig. 11b beschrieben worden ist, der Kolben 101 durch den unter Druck stehenden Kolben 95 nach unten verschoben wird, bis der Kolben 101 am Boden des Druckraumes 103 anliegt (Fig. 11e). Soll aus dem dritten Gang wieder in die Neutralstellung N zurückgeschaltet werden, wird durch Umschalten des Magnetventils 147 über die Druckbohrung 104 das im Druckraum 103 befindliche Druckmedium unter Druck gesetzt, wodurch der Kolben 101 zurückgeschoben wird und den Kolben 95 in der beschriebenen Weise mitnimmt. Sobald der Kolben 101 mit seinem Flansch 105 an der Zwischenwand 102 anliegt, ist die Neutralstellung N erreicht.

Fig. 11d schließlich zeigt die Schaltwelle 43 für den fünften und sechsten Gang des Schaltgetriebes. Die Schaltwelle 43 nimmt die der Neutralstellung N entsprechende Lage ein. Wie zuvor im einzelnen beschrieben worden ist, kann durch unterschiedliche Druckbeaufschlagung durch entsprechendes Schalten des Magnetventils 148 die Schaltwelle 43 und über die Schaltgabel 115 die entsprechende Getriebewelle 77 so verschoben werden, daß der fünfte oder sechste Gang eingelegt wird.

Bei der Ausführungsform nach Fig. 11 werden die Schaltwellen 43 direkt hydraulisch betätigt. Im übrigen ist diese Steuereinrichtung gleich ausgebildet wie bei den vorigen Ausführungsformen. So hat die Steuereinrichtung ebenfalls die Magnetventile, deren Magnetteil im Magnetgehäuse 3 und deren Ventilteil im Hydraulikgehäuse 10 untergebracht sind.

Die beschriebenen Steuereinrichtungen zeichnen sich dadurch aus, daß sie aus nur wenigen kompakten Bauteilen bestehen, so daß sie nur geringes Gewicht haben und eine optimale Bauraumausnutzung ermöglichen. Die Elektronik, die Sensorik und die Aktuatorik sind auf engstem Raum untergebracht, so daß zwischen ihnen nur kurze Wege bestehen. Zwischen der Druckmediumversorgung, dem Gangsteller, der Kupplung und der Elektronik entfallen aufwendige Leitungen und Kabelbäume, wodurch infolge dieser geringen logistischen Aufwendungen eine erhebliche Kosteneinsparung erzielt wird. Auch der Fertigungsaufwand ist gering. Da bei den beschriebenen Steuereinrichtungen Steck-, Löt- und Krimpverbindungen von Steckern und Kabelbäumen entfallen, ergibt sich auch eine hohe Zuverlässigkeit der Steuereinrichtungen. Für die Druckmediumversorgung ist ein externer Tank nicht notwendig. Es kann für die Hydraulikfunktion und für das Getriebe dasselbe Medium, also Getriebeöl, verwendet werden. Die Pumpe 14 saugt das Getriebeöl, wie Fig. 9 beispielhaft zeigt, über Ölfilter 107 direkt an. Da zumindest das Hydraulikgehäuse 10 der Steuereinrichtungen im Getriebegehäuse 1 liegt, ergeben sich nur geringe Schallemissionen infolge der dämpfenden Wirkung des Getriebegehäuses 1. Die Magnetventile 4 bis 8 sind einfach aufgebaut. Insbesondere entfällt ein dichtes Magnetgehäuse, so daß entsprechende Kunststoffstecker, Abdichtungen, Anschraubflächen und dergleichen entfallen können. Die Magnetteile der Magnetventile 4 bis 8 sind vielmehr, wie Fig. 1 beispielhaft zeigt, über Federkontakte 108 unmittelbar mit den entsprechenden elektrischen/elektronischen Bauteilen 12 der Elektronikplatte 11 verbunden. Infolge der integrierten Bauweise entfällt der Einbau verschiedener Teilsysteme und deren hydraulische und elektrische Kontaktierung. Die Montagefreundlichkeit wird dadurch erheblich verbessert. Bei den Ausführungsformen nach den Fig. 1 bis 9 sind die Steuereinrichtungen Komplettbauteile, so daß alle für die Funktion notwendigen Bauteile integriert sind. Die Steuereinrichtungen lassen sich darum vor dem Einbau in das Getriebe einfach auf ihre entsprechenden Funktionen prüfen. Bei den Ausführungsformen nach den Fig. 10 und 11 ist die Steuereinrichtung in das Getriebe integriert, so daß hier erst das komplett aufgebaute Schaltgetriebe geprüft werden kann.

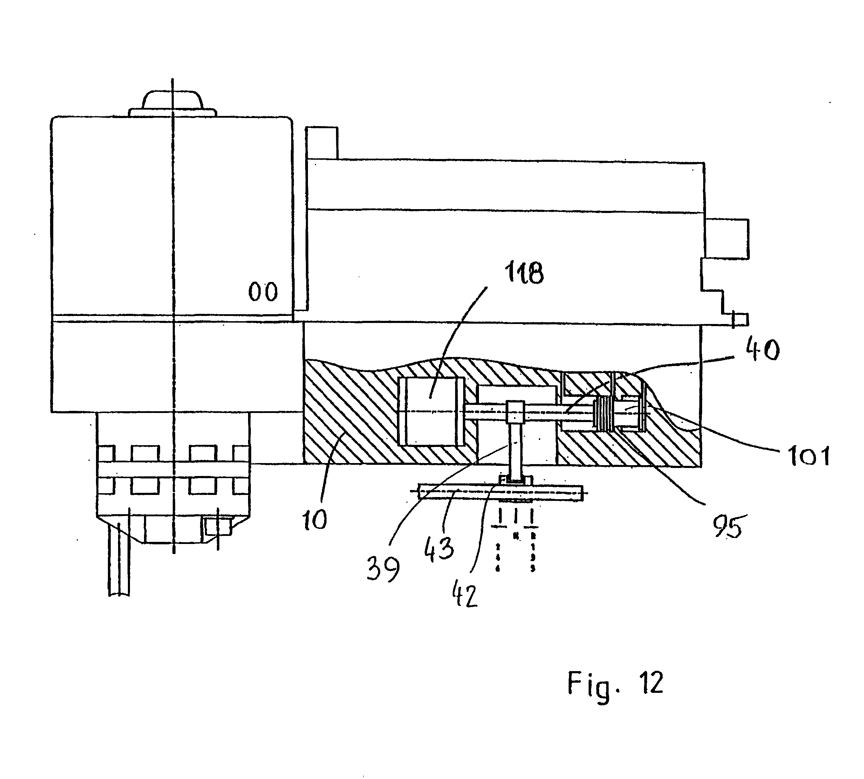

Bei der Ausführungsform nach den Fig. 12 bis 15 wird für die Gassenwahl die Welle 40 mit einem im Hydraulikgehäuse 10 untergebrachten Aktuator 118 um ihre Achse gedreht. Der Aktuator 118 ist an einem Ende der Welle 40 vorgesehen, deren anderes Ende den Kolben 95 trägt, der gleich ausgebildet ist wie bei der Ausführungsform nach Fig. 11. Der Kolben 95 wirkt, wie anhand von Fig. 11 im einzelnen beschrieben worden ist, mit dem Kolben 101 zusammen. Auf der Welle 40 sitzt drehfest der Schalthebel 39, der durch Drehen der Welle 40 wahlweise mit dem Schaltfinger 42 der entsprechenden Schaltwelle 43 in Eingriff gebracht werden kann.

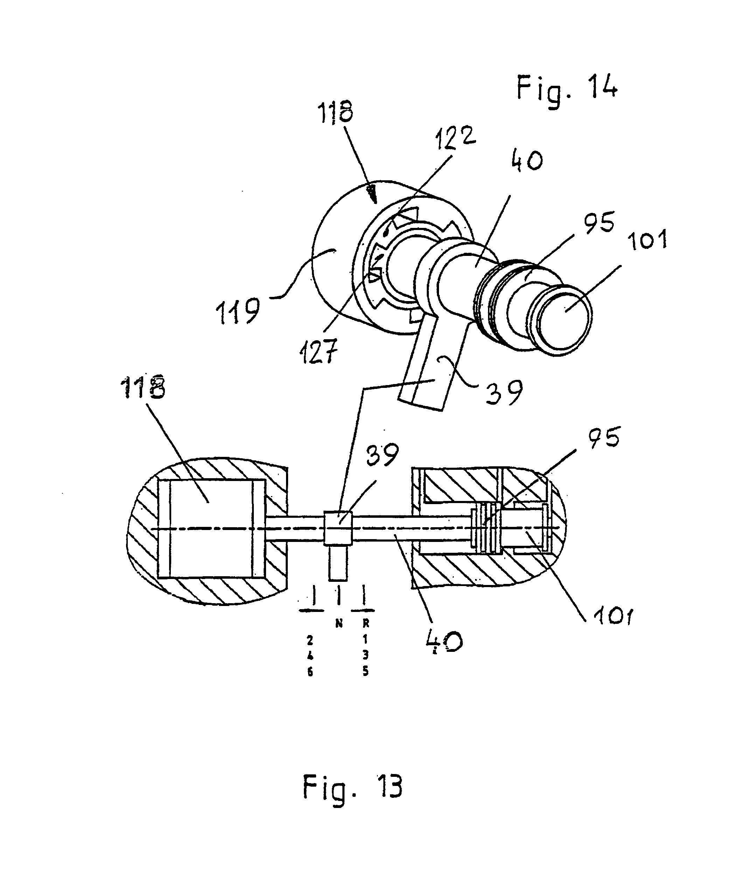

Das Schaltgetriebe ist beispielhaft so ausgebildet, daß die Welle 40, ausgehend von der Neutralstellung N, in den Fig. 12 und 13 durch Drehen um ihre Achse in die jeweilige Gasse des Schaltgetriebes gedreht werden kann, um dann in der ausgewählten Gasse die Gänge einzulegen.

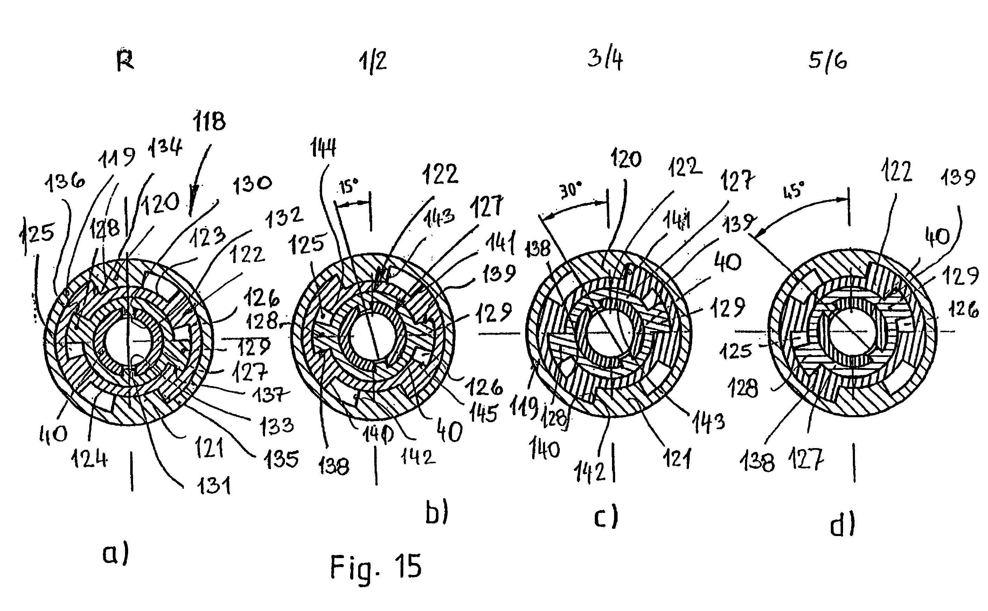

Der Aktuator 18 hat ein zylindrisches Gehäuse 119 (Fig. 14 und 15), das an einer Innenwandung diametral einander gegenüberliegend zwei Vorsprünge 120 und 121 aufweist. An der Innenwand des Gehäuses 119 liegt ein äußerer Drehkolben 122 an, der außenseitig zwei diametral einander gegenüberliegende, in Umfangsrichtung verlaufende Vertiefungen 123 und 124 aufweist, die in Umfangsrichtung länger sind als die Vorsprünge 120, 121 des Gehäuses 119. Der ringförmige Drehkolben 122 ist an seiner Innenwandung mit diametral einander gegenüberliegen Vertiefungen 125, 126 versehen, die in Umfangsrichtung kürzer sind als die äußeren Vertiefungen 123, 124 und die zu diesen äußeren Vertiefungen in Umfangsrichtung versetzt angeordnet sind.

An der Innenwand des äußeren Drehkolbens 122 liegt ein innerer, ringförmig ausgebildeter Drehkolben 127 an. Er ist außenseitig mit diametral einander gegenüberliegenden, radial abstehenden Vorsprüngen 128, 129 versehen, die in Umfangsrichtung kürzer sind als die inneren Vertiefungen 125, 126 des äußeren Drehkolbens 122, in welche sie eingreifen. Innenseitig ist der Drehkolben 127 mit diametral einander gegenüberliegenden federartigen Vorsprüngen 130, 131 versehen, die in axiale Nuten 132, 133 der Welle 40 eingreifen. Dadurch sitzt der innere Drehkolben 127 drehfest auf der Welle 40. Da die Vorsprünge 130, 131 und die Nuten 132, 133 in Achsrichtung verlaufen, kann die Welle 40 gegenüber dem inneren Drehkolben 127 axial verschoben werden, wenn der Kolben 95 bzw. der Kolben 101, wie anhand von Fig. 11 erläutert worden ist, mit Hydraulikmedium beaufschlagt wird.

Fig. 15a zeigt die Situation, wenn die Gasse für den Rückwärtsgang R angewählt wird. Die beiden Drehkolben 122, 127 sind mit Hydraulikmedium beaufschlagt. Der äußere Drehkolben 122 liegt mit seinen radial verlaufenden Kolbenflächen 134, 135 an den Vorsprüngen 120, 121 des Gehäuses 119 an. Der innere Drehkolben 127 liegt mit seinen Vorsprüngen 128, 129 an Seitenwänden 136, 137 der inneren Vertiefungen 125, 126 des äußeren Drehkolbens 122 unter dem Druck des Hydraulikmediums an. Da der innere Drehkolben 127 drehfest auf der Welle 40 sitzt, nimmt die Welle 40 die entsprechende Drehlage ein, in welcher der drehfest auf ihr sitzende Schalthebel 39 in die zum Einlegen des Rückwärtsganges notwendige Schaltwelle 33 eingreift.

Soll die Gasse zum Einlegen des ersten und zweiten Ganges angewählt werden, dann werden die Vorsprünge 128, 129 des inneren Drehkolben 127 so mit Hydraulikmedium beaufschlagt, daß der innere Drehkolben 127 aus der Stellung gemäß Fig. 15a im Gegenuhrzeigersinn so weit gedreht wird, bis seine Vorsprünge 128, 129 an den gegenüberliegenden Seitenwänden 138, 139 der inneren Vertiefungen 125, 126 des äußeren Drehkolbens 122 anschlagen (Fig. 15b). Der äußere Drehkolben 122 bleibt weiterhin druckbeaufschlagt, so daß er an den Vorsprüngen 120, 121 des Gehäuses 119 in Anlage bleibt. Im dargestellten Ausführungsbeispiel beträgt der Drehwinkel des inneren Drehkolbens 127 aus der Stellung gemäß Fig. 15a in die Stellung gemäß Fig. 15b beispielhaft 15°. Da die Welle 40 drehfest mit dem inneren Drehkolben 127 verbunden ist, wird die Welle 40 in entsprechendem Maße gedreht. Dadurch wird der auf ihr drehfest sitzende Schalthebel 39 so geschwenkt, daß er mit dem Schaltfinger 42 der entsprechenden Schaltwelle 43 in Eingriff gelangt.

Um aus der Stellung gemäß Fig. 15b die Gasse für den dritten und vierten Gang anzuwählen, wird der äußere Drehkolben 122 derart mit Hydraulikmedium beaufschlagt, daß er aus der Stellung gemäß den Fig. 15a oder 15b entgegen dem Uhrzeigersinn so weit gedreht wird, bis er mit seinen in Drehrichtung vorderen, radial verlaufenden Kolbenflächen 140, 141 an den Seitenwänden 142, 143 der Vorsprünge 120, 121 des Gehäuses 119 zur Anlage kommt. Über einen Teil des Drehweges des äußeren Drehkolbens 122 wird der innere Drehkolben 127 mitgenommen. In der Stellung gemäß Fig. 15b liegen die Vorsprünge 128, 129 des inneren Drehkolbens 127 mit Abstand von der in Drehrichtung rückwärtigen Seitenwand 144, 145 der inneren Vertiefungen 125, 126 des äußeren Drehkolbens 122. Wird er in der beschriebenen Weise gegen den Uhrzeigersinn gedreht, schlägt er nach einem Teil seines Drehweges mit den Seitenwänden 144, 145 an den Vorsprüngen 128, 129 des inneren Drehkolbens 127 an und nimmt ihn beim weiteren Drehen in die in Fig. 15c dargestellte Lage mit. In dieser Stellung haben die Vorsprünge 128, 129 des inneren Drehkolbens 127 Abstand von den Seitenwänden 138, 139 der Vertiefungen 125, 126 des äußeren Drehkolbens 122. Der Drehweg des inneren Drehkolbens 127 beträgt hierbei, ausgehend von der Stellung gemäß Fig. 15b, beispielhaft 15°. Bezogen auf die Stellung gemäß Fig. 15a wird auf diese Weise die Welle 40 um insgesamt 30° um ihre Achse gedreht. Auf diese Weise wird der auf der Welle 40 sitzende Schalthebel 39 so verschwenkt, daß er mit der für den dritten und vierten Gang vorgesehenen Schaltwelle 43 des Schaltgetriebes in Eingriff kommt.

Schließlich kann die Welle 40 im dargestellten Ausführungsbeispiel um weitere 15° um ihre Achse gedreht werden, um die Gasse für den fünften und sechsten Gang anzuwählen. Um diese Drehbewegung zu erreichen, wird der äußere Drehkolben 122 durch Druckbeaufschlagung weiter in seiner Anschlagstellung gemäß Fig. 15c gehalten. Durch Druckbeaufschlagung wird der innere Drehkolben 127 weiter entgegen dem Uhrzeigersinn gedreht, bis seine Vorsprünge 128, 129 an den Seitenwänden 138, 139 der Vertiefungen 125, 126 des äußeren Drehkolbens 122 zur Anlage kommen (Fig. 15d). Der auf der Welle 40 sitzende Schalthebel 39 wird hierbei so geschwenkt, daß er mit der für den fünften und sechsten Gang vorgesehenen Schaltwelle 43 in Eingriff kommt.

Sobald die Welle 40 in der beschriebenen Weise zur Gangauswahl gedreht worden ist, wird sie durch Druckbeaufschlagung der Kolben 95, 101 axial verschoben, wie dies anhand des Ausführungsbeispiels gemäß Fig. 11 im einzelnen beschrieben worden ist. Dann wird in der ausgewählten Gasse der gewünschte Gang eingelegt.

Um die Welle 40 wieder zurückzudrehen, erfolgen die entsprechenden Druckbeaufschlagungen der Drehkolben 122, 127 in entsprechend umgekehrtem Sinn.

Die zur Zuführung des Hydraulikmediums in die verschiedenen Druckräume, die durch die Vertiefungen in den beiden Drehkolben 122, 127 gebildet werden, erforderlichen Bohrungen im Hydraulikgehäuse 10 sind der Übersichtlichkeit wegen nicht dargestellt. Ebensowenig sind die erforderlichen Ventile dargestellt, um die verschiedenen Druckräume in entsprechendem Maße unter Druck zu setzen.

Im beschriebenen Ausführungsbeispiel sind die jeweiligen Drehwinkel nur beispielhaft mit 15° angegeben. Selbstverständlich können die Drehwinkel, abhängig von der Art des Schaltgetriebes, auch andere Werte haben. Auch müssen die Drehwinkel zur Anwahl der jeweiligen Gassen nicht gleich sein.

Mit dem beschriebenen Aktuator 118 ist es auch möglich, die Schaltwelle 43 direkt zu drehen, d.h. auf den Gangsteller 29 zu verzichten.

Die beschriebenen Steuereinrichtungen ermöglichen eine einfache Lagerhaltung und Ersatzteilverwaltung. Wie die Fig. 1 und 4 zeigen, ist nur ein einziger Anschluß 22 für die Signalleitungen und die Spannungsversorgung der Steuereinrichtungen vorgesehen. Dadurch werden unerwünschte Störsignale zumindest verringert, wenn nicht sogar vollständig vermieden. Es hat aber auch Vorteile, wie die nachfolgenden Ausführungsbeispiele zeigen, mehrere Anschlüsse/Stecker zu verwenden. Das Gehäuse 3, 10 der Steuereinrichtungen ist einfach ausgebildet. Die Innenteile des Gehäuses können aus Aluminium und Kunststoff bestehen, während die äußeren Teile der Gehäuse 3, 10 vorteilhaft aus Kunststoff bestehen. Wegen der geringeren Zahl an Bauteilen wird auch die Umwelt weniger belastet. Auch der Ressourcenverbrauch wird verringert.

Da sich die Steuereinrichtung zumindest mit dem Hydraulikgehäuse 10 innerhalb des Getriebegehäuses 1 befindet, wird die Gefahr von austretendem Öl infolge einer Gehäuseleckage erheblich verringert, da auftretendes Leckageöl direkt in das im Getriebegehäuse 1 befindliche Getriebeöl zurück gelangt. Die Umwelt wird somit nicht durch Ölleckagen verschmutzt. Für das Gehäuse 3, 10 der Steuereinrichtung ist nur die einzige Dichtung 25 erforderlich, die an der Kontaktfläche vom Magnetgehäuse 3 zum Getriebegehäuse 1 vorgesehen ist (Fig. 1 und 4).

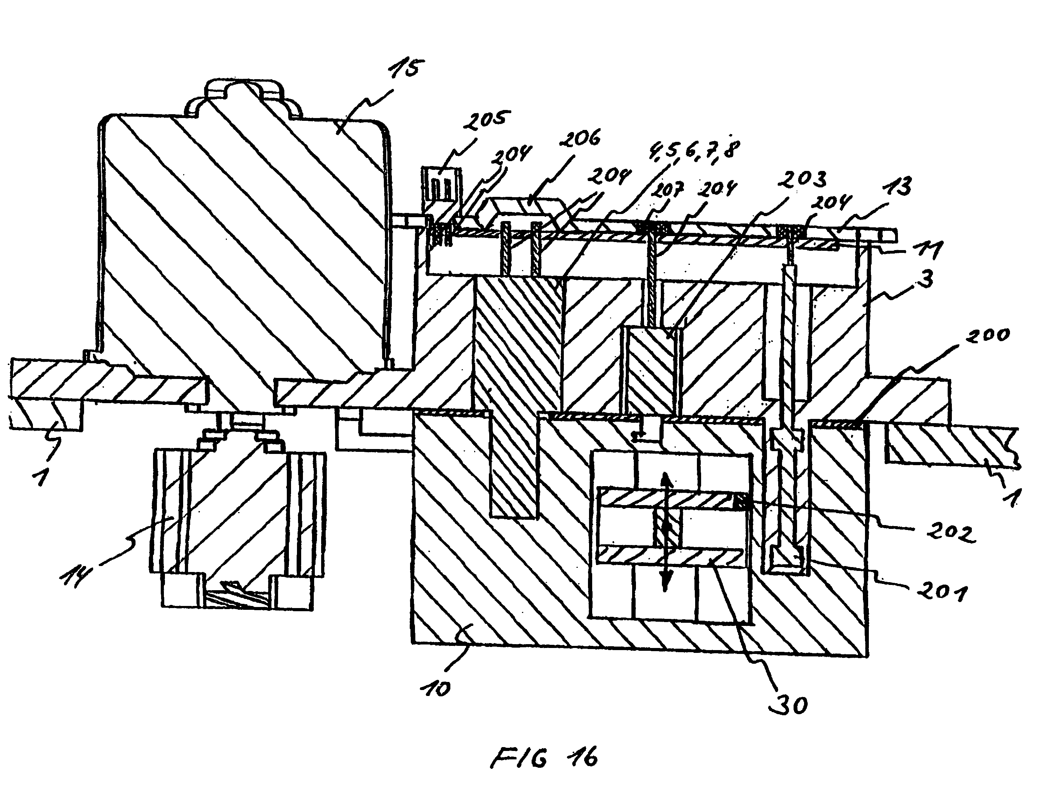

Fig. 16 zeigt eine Ausführungsform der Steuereinrichtung, bei welcher entsprechend den vorigen Ausführungsformen das Hydraulikgehäuse 10 mit den Ventilteilen der Magnetventile 4 bis 8 innerhalb des Getriebegehäuses 1 liegt. Auf dem Hydraulikgehäuse 10 sitzt unter Zwischenlage eines Dichtungselements 200, z. B. einer Ringdichtung (vgl. vorige Ausführungsformen) einer Silikonraupe oder einer Flächendichtung, das Magnetgehäuse 3, in dem die Magnetteile der Magnetventile 4 bis 8 untergebracht sind. Aus Gründen der Übersichtlichkeit ist in dieser und den folgenden Figuren beispielhaft jeweils nur ein einziges Magnetventil dargestellt. Um den erforderlichen Schwenkweg des Schalthebels bei der Auswahl der Gasse und den erforderlichen Verschiebeweg des Schalthebels zum Einlegen des gewünschten Ganges zu erfassen, ist eine Wegsensorik 201, z. B. ein PLCD-Sensor, ein Hall-Sensor oder ein GMR-Sensor, in den abgedichteten Elektronikraum des Magnetgehäuses 3 integriert, vorzugsweise eingegossen oder in Vergußmasse eingebettet. Ein Gebermagnet 202 für die Wegsensorik 201 ist auf dem, hier nur schematisch dargestellten Stellelement 30 befestigt. Das Stellelement 30 ist dabei funktionsgleich mit der in den Fig. 1 bis 3 beschriebenen Ausführungsform.

Zum Bestimmen des Druckes des Hydraulikmediums ist eine Drucksensorik 203, z. B. ein Drucksensor oder ein Druckschalter, auf dem Hydraulikgehäuse 10 derart befestigt, daß sie in das Magnetgehäuse 3 hineinragt. Ist das Dichtungselement 200 als Flächendichtung, vorzugsweise als gummierte Metalldichtung, ausgebildet, so daß die Drucksensorik 203 im dichten Bereich des Magnetgehäuses 3 untergebracht ist, ist für die Drucksensorik 203 kein eigenes, dichtes Gehäuse erforderlich, und auf eine dichte Durchführung zur Steuerelektronik kann verzichtet werden.

Der auf das Magnetgehäuse 3 aufgesetzte Deckel 13 ist als Metallplatte, z. B. Aluminiumplatte, ausgebildet. Die Elektronikplatte 11 ist auf der dem Elektronikraum des Magnetgehäuses 3 zugewandten Seite des Deckels 13 auflaminiert oder aufgeklebt. Auf diese Weise wird eine einfache Montage und eine gute Wärmeabfuhr der Steuerelektronik gewährleistet.

Die Anschlußelemente 204, z. B. Drähte oder Kontaktstifte, der Magnetventile 4 bis 8, der Wegsensorik 201, der Drucksensorik 203 oder auch von Steckern 205 können unmittelbar in die Elektronikplatte 11 eingepreßt oder eingelötet werden. Der Deckel 13 weist hierzu entsprechende Sicken 206 zur Freistellung der Einpreßzonen oder Aussparungen 207 zur Verlötung auf. Solche Aussparungen können nach der Lötung z. B. durch einen Verguß verschlossen werden, so daß das Magnetgehäuse 3 mit dem Deckel 13 einen dichten Elektronikraum bildet. Um die Dichtheit des Elektronikraums auch bei Druckdifferenzen sicherzustellen, die durch Temperaturschwankungen hervorgerufen werden, kann im Elektronikraum oder im Magnetgehäuse 3 ein Druckausgleichselement angeordnet sein. Ebenso können Druckausgleichselemente beispielsweise im Deckel 13 oder in einem Stecker 205 vorgesehen werden.

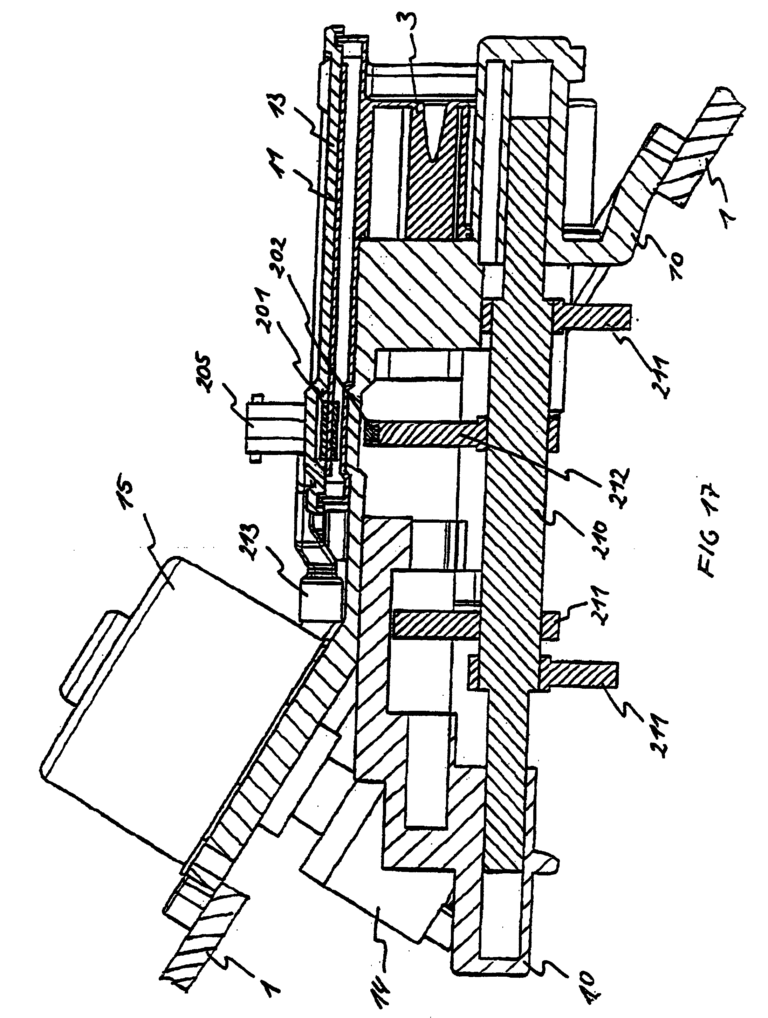

In Fig. 17 ist eine Ausführungsform dargestellt, bei der im Gegensatz zu den bisher beschriebenen Ausführungsformen nicht das Magnetgehäuse 3, sondern das Hydraulikgehäuse 10 am Getriebegehäuse 1 befestigt, z. B. angeflanscht oder angeschraubt ist. Auf diese Weise wird die mechanische Beanspruchung des Magnetgehäuses 3 deutlich verringert und es kann beispielsweise als Spritzgußteil aus einem nicht leitenden Material, vorzugsweise Kunststoff, ausgeführt sein. Im Gegensatz zu den bisher beschriebenen Ausführungsformen, befindet sich das Hydraulikgehäuse 10 bei dieser Ausführungsform nur teilweise im Getriebegehäuse 1. Diese Anordnung weist jedoch dieselben Vorteile auf wie die Ausführungsformen, bei denen das Hydraulikgehäuse 10 vollständig im Getriebegehäuse 1 liegt. So kann z. B. eventuell auftretendes Leckagemedium auch bei dieser Ausführungsform direkt in das Getriebegehäuse abfließen. Im Gegensatz zu den bisher beschriebenen Ausführungsformen wird die Schaltgasse über eine translatorische oder axiale Bewegung einer Schaltwelle 210 ausgewählt. Auf der Schaltwelle 210 sitzen drehfest Schaltklauen 211. Durch eine Drehbewegung der Schaltwelle 210 werden dann jeweils eine der Schaltklauen in Eingriff gebracht und somit ein Gang eingelegt.

Zur Positionserkennung der Schaltwelle 210 ist eine Wegsensorik 201, z. B. ein Hall-IC oder die Magnetspulen eines PLCD-Sensors, auf der Elektronikplatte 11 angeordnet. Der zugehörige Gebermagnet 202 ist auf einem Hebel 212, der ähnlich einer Schaltklaue auf der Schaltwelle 210 angeordnet ist, befestigt. Auch bei dieser Ausführungsform ist kein separates Gehäuse für die Wegsensorik 201 erforderlich. Der Motor 15 der Pumpe 14 ist bei dieser Ausführungsform über einen Pumpenstecker 213 mit der Steuerelektronik verbunden. Die Elektronikplatte 11 ist analog zum Ausführungsbeispiel nach Fig. 16 auf dem als Metallplatte ausgeführten Deckel 13 auflaminiert oder aufgeklebt.

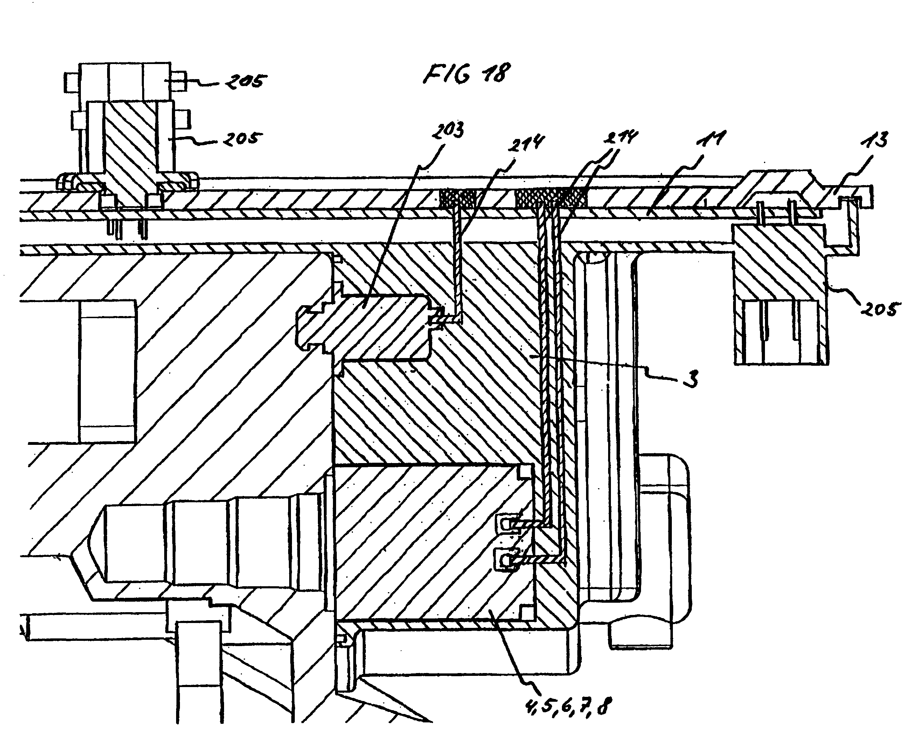

In Fig. 18 sind anhand einer Teilansicht einer Ausführungsform, die weitgehend identisch mit der Ausführungsform nach Figur 17 ist, einige Details der Steuereinrichtung dargestellt. Ist das Magnetgehäuse 3 als Spritzgußteil aus einem nichtleitenden Material, vorzugsweise Kunststoff, ausgeführt, so können ein oder mehrere Stecker 205, z. B. für die Spannungsversorgung der Steuereinrichtung, für externe Aktuatoren, für den Pumpenmotor oder externe Sensoren - z. B. für Drehzahlen oder die Kupplungsposition - alternativ zum Einpressen oder Einlöten auch in das Magnetgehäuse integriert, vorzugsweise eingespritzt, werden (vgl. Stecker 205 im rechten Teil der Figur). Mehrere Stecker 205 haben dabei den Vorteil, daß nach einem durchzuführenden Funktionstest verschiedene elektrische Verbindungen, z. B. die Anschlüsse zu den getriebeinternen Sensoren, aufgrund des gemeinsamen Einbaus in das Fahrzeug nicht mehr gelöst werden müssen. Dadurch wird die Funktionssicherheit des Systems erhöht.

Die Magnetteile der Magnetventile 4 bis 8 - der Ventilteil ist hier nur durch eine entsprechende Bohrung angedeutet - oder auch die Sensorik, z. B. die Drucksensorik 203, werden über Leitungselemente 214, die in das Magnetgehäuse 3 integriert sind, vorzugsweise eingespritzt oder eingedrückt, elektrisch leitend mit der Steuerelektronik auf der Elektronikplatte 11 verbunden. Die Leitungselemente können dabei z. B. als Stanzgitter, gestanzte Kontakte, gestanzte Drähte oder gestanzte Stifte ausgeführt sein. Der Anschluß der Leitungselemente an den Steuer- und Getriebekomponenten, z. B. Magnetventile 4 bis 8 oder Drucksensorik 203, ist üblicherweise als Steckkontakt (vgl. Anschluß des Magnetventils) ausgebildet. Ebenso sind aber auch Einpressverbindungen möglich (vgl. Anschluß der Drucksensorik 203).

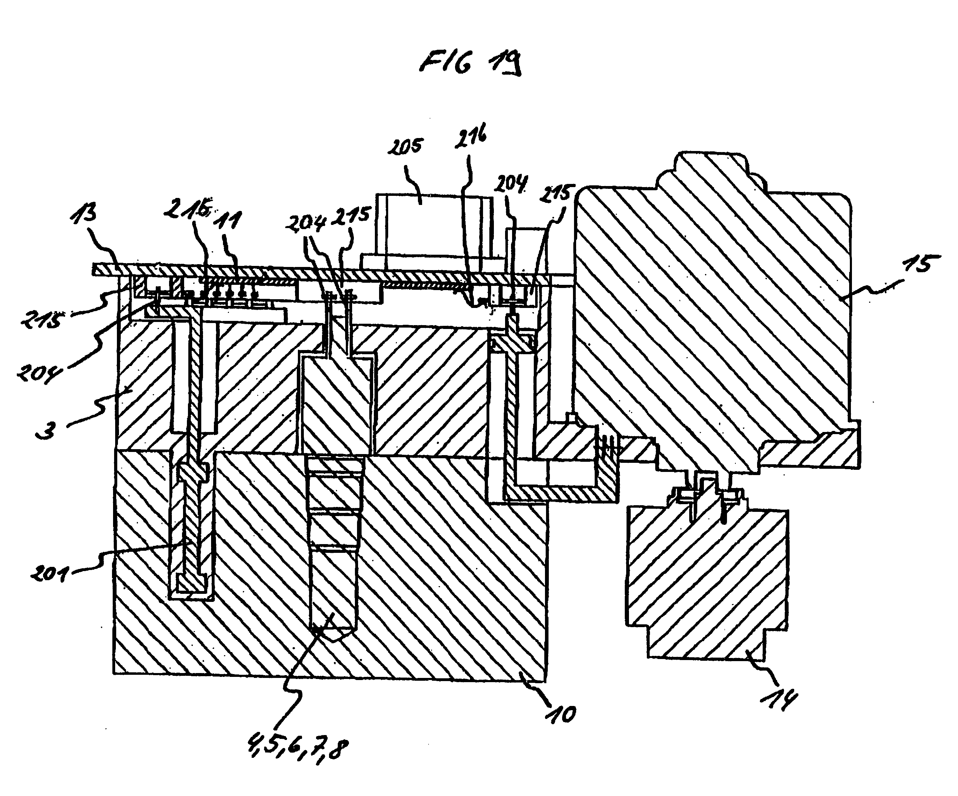

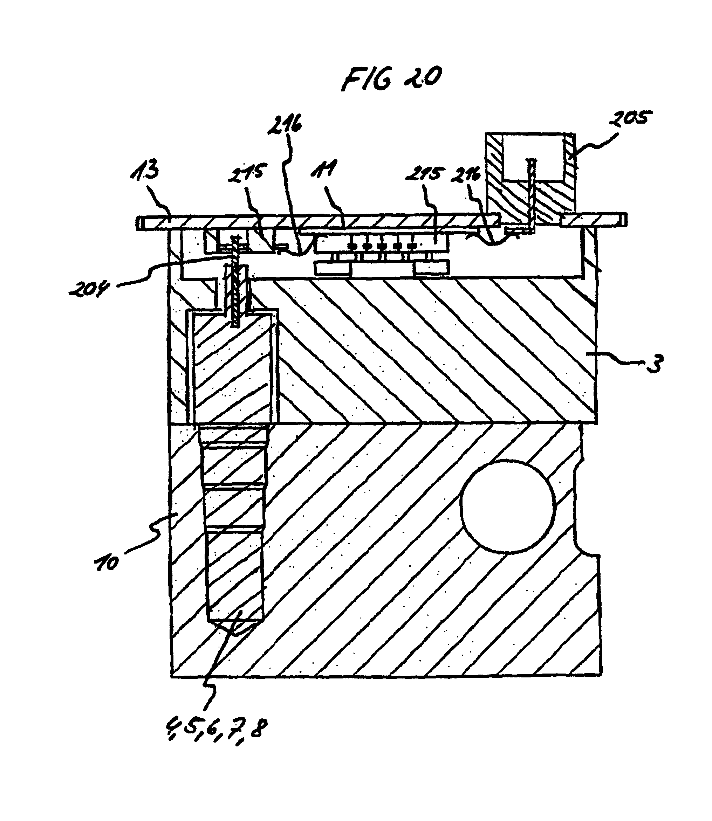

Die Fig. 19 und 20 zeigen eine Ausführungsform, bei welcher die auf den Deckel 13 auflaminierte Elektronikplatte 11 als bondbarer Schaltungsträger, z. B. FR4-, LTCC- oder Dickschichtkeramik-Träger, ausgebildet ist. Die Getriebe- und Steuereinrichtungs-Komponenten, wie z. B. Wegsensorik 201, Motor 15 der Pumpe 14 oder Magnetventile 4 bis 8, werden über Bondleisten 215 mit der auf der Elektronikplatte 11 angeordneten Steuerelektronik kontaktiert. Die Bondleisten 215 weisen Steckbereiche auf, in die die Anschlußelemente 204 der Getriebe- und Steuereinrichtungs-Komponenten eingesteckt werden. Diese Steckverbindungen können lösbar und unlösbar, einfach oder mehrfach steckbar ausgeführt sein. Die Bondleisten 215 sind über Bonddrähte 216 mit der Elektronikplatte 11 elektrisch leitend verbunden. Ebenso können Anschlußelemente 204, z. B. eines Steckers 205, unmittelbar auf die Elektronikplatte gebondet werden (vgl. Fig. 20).

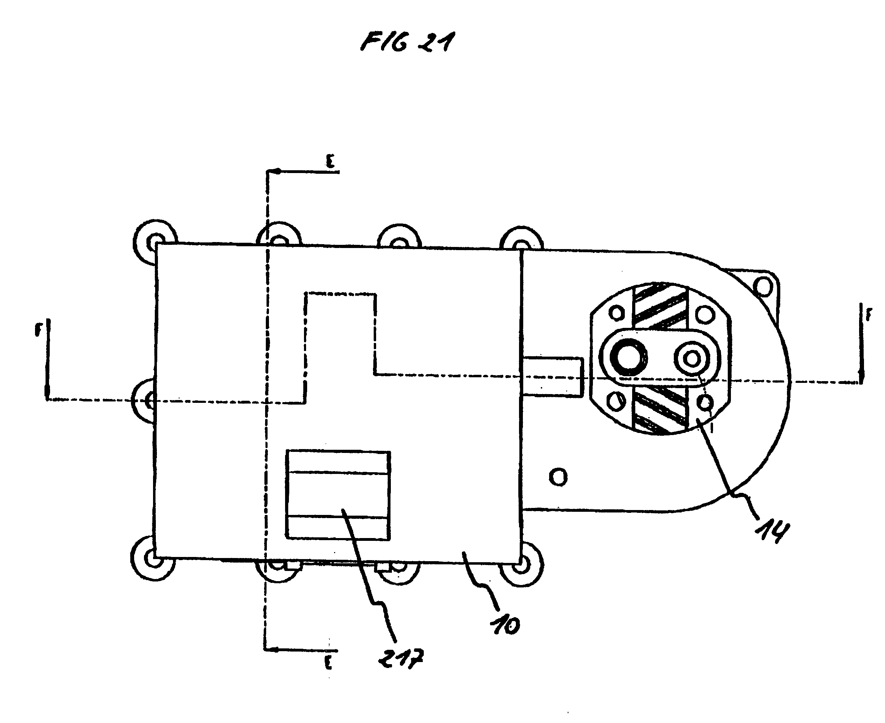

In Fig. 21 ist eine Ansicht der Steuereinrichtung gemäß dem Ausführungsbeispiel nach den Fig. 19 und 20 von unten dargestellt. Neben der Pumpe 14 ist das Hydraulikgehäuse 10 mit einer Öffnung 217 zum Getrieberaum zu erkennen. Mit E-E und F-F sind die Schnittebenen der Fig. 19 bzw. 20 gekennzeichnet.

Die verschiedenen Gestaltungsmöglichkeiten, insbesondere bezüglich der Anschlußtechnik und der Anordnung und Integration der Sensorik, sind häufig nur in wenigen Figuren dargestellt, können jedoch auch auf die übrigen Ausführungsformen übertragen werden.

## Patentansprüche

1. Elektronisch-hydraulische Steuereinrichtung für Getriebe von Fahrzeugen, vorzugsweise von Kraftfahrzeugen, mit einem Gehäuse (3, 10), das aufweist
- einen Magnetgehäuseteil (3), in dem eine Elektronik (11, 12) zur Steuerung von Magnetventilen (4 bis 8) und Magnetteile der Magnetventile (4 bis 8) untergebracht sind, und
- einen Hydraulikgehäuseteil (10), der sich zumindest teilweise innerhalb des Getriebegehäuses (1) befindet, der mit Druckmedium versorgt wird und in dem Hydraulikteile der Magnetventile (4 bis 8) liegen,
wobei die Steuereinrichtung mit dem Hydraulikgehäuseteil (10) in eine Einbauöffnung (2) eines Getriebegehäuses (1) einbaubar ist.

2. Steuereinrichtung nach Anspruch 1,
**dadurch gekennzeichnet, daß** der Hydraulikgehäuseteil (10) einen Ansatz (17) aufweist, an dem eine Pumpe (14) für das Druckmedium und ein Motor (15) für die Pumpe (14) befestigt sind.

3. Steuereinrichtung nach dem vorhergehenden Anspruch,
**dadurch gekennzeichnet, daß** die Pumpe (14) und der Motor (15) auf einander gegenüberliegenden Seiten des Ansatzes (17) vorgesehen sind.

4. Steuereinrichtung nach Anspruch 2 oder 3,
**dadurch gekennzeichnet, daß** die Pumpe (14) im Getriebegehäuse (1) liegt.

5. Steuereinrichtung nach einem der Ansprüche 2 bis 4,
**dadurch gekennzeichnet, daß** der Motor (15) aus dem Getriebegehäuse (1) ragt.

6. Steuereinrichtung nach einem der vorhergehenden Ansprüche,
**dadurch gekennzeichnet, daß** für das Druckmedium wenigstens ein Speicher (24) vorgesehen ist.

7. Steuereinrichtung nach dem vorhergehenden Anspruch,
**dadurch gekennzeichnet, daß** der Speicher (24) in die Steuereinrichtung integriert ist.

8. Steuereinrichtung nach dem vorhergehenden Anspruch,
**dadurch gekennzeichnet, daß** der Speicher (24) im Hydraulikgehäuseteil (10) untergebracht ist.

9. Steuereinrichtung nach Anspruch 7 oder 8,
**dadurch gekennzeichnet, daß** der Speicher (24) mindestens ein Balgelement (51) aufweist, das in einem Aufnahmeraum (52) untergebracht ist.

10. Steuereinrichtung nach dem vorhergehenden Anspruch,
**dadurch gekennzeichnet, daß** das Balgelement (51) mit Luft gefüllt ist.

11. Steuereinrichtung nach einem der Ansprüche 6 bis 8,
**dadurch gekennzeichnet, daß** der Speicher (24) einen Kolben (62) aufweist, der das Speichermedium vorspannt.

12. Steuereinrichtung nach dem vorhergehenden Anspruch,
**dadurch gekennzeichnet, daß** der Kolben (62) unter der Kraft wenigstens einer Feder (63, 68) steht.

13. Steuereinrichtung nach einem der Ansprüche 2 bis 5,
**dadurch gekennzeichnet, daß** die Steuereinrichtung mit einem Stecker (70) zum Anschluß an den Motor (15) versehen ist.

14. Steuereinrichtung nach dem vorhergehenden Anspruch,
**dadurch gekennzeichnet, daß** der Stecker (70) im Getriebegehäuse (1) liegt.

15. Steuereinrichtung nach einem der vorhergehenden Ansprüche,
**dadurch gekennzeichnet, daß** im Hydraulikgehäuseteil (10) ein Gangsteller (29) untergebracht ist.

16. Steuereinrichtung nach dem vorhergehenden Anspruch,
**dadurch gekennzeichnet, daß** der Gangsteller (29) durch die Magnetventile (4 bis 8) betätigbar ist.

17. Steuereinrichtung nach einem der vorhergehenden Ansprüche,
**dadurch gekennzeichnet, daß** mit der Steuereinrichtung Schaltmuffen (75) des Getriebes hydraulisch ansteuerbar sind.

18. Steuereinrichtung nach dem vorhergehenden Anspruch,
**dadurch gekennzeichnet, daß** die Schaltmuffen (75) mit zwei Druckräumen (87, 88) versehen sind, an die jeweils eine Druckleitung (89, 90) angeschlossen ist.

19. Steuereinrichtung nach dem vorhergehenden Anspruch,
**dadurch gekennzeichnet, daß** die Druckleitungen (89, 90) Bohrungen in der jeweiligen Getriebewelle (77) des Getriebes sind.

20. Steuereinrichtung nach Anspruch 18 oder 19,
**dadurch gekennzeichnet, daß** in den Druckräumen (87, 88) jeweils ein Kolben (109, 110) untergebracht ist.

21. Steuereinrichtung nach dem vorhergehenden Anspruch,
**dadurch gekennzeichnet, daß** die Kolben (109, 110) gleich ausgebildet und spiegelsymmetrisch zueinander angeordnet sind.

22. Steuereinrichtung nach Anspruch 20 oder 21,
**dadurch gekennzeichnet, daß** den Kolben (109, 110) für die eine Endstellung jeweils ein Gegenanschlag (113, 114) in der Schaltmuffe (75) zugeordnet ist.

23. Steuereinrichtung nach einem der vorhergehenden Ansprüche,
**dadurch gekennzeichnet, daß** Schaltwellen (43) des Getriebes hydraulisch verschiebbar sind.

24. Steuereinrichtung nach dem vorhergehenden Anspruch,
**dadurch gekennzeichnet, daß** auf jeder Schaltwelle (43) ein Kolben (95) sitzt.

25. Steuereinrichtung nach dem vorhergehenden Anspruch,
**dadurch gekennzeichnet, daß** der Kolben (95) zwei Druckräume (97, 98) voneinander trennt.

26. Steuereinrichtung nach dem vorhergehenden Anspruch,
**dadurch gekennzeichnet, daß** in jeden Druckraum (97, 98) jeweils eine Druckleitung (99, 100) mündet.

27. Steuereinrichtung nach einem der Ansprüche 24 bis 26,
**dadurch gekennzeichnet, daß** den Kolben (95) der Schaltwellen (43) jeweils ein Anschlag (101) zugeordnet ist.

28. Steuereinrichtung nach dem vorhergehenden Anspruch,
**dadurch gekennzeichnet, daß** der Anschlag (101) ein mit Druck beaufschlagbarer Kolben ist.

29. Steuereinrichtung nach Anspruch 27 oder 28,
**dadurch gekennzeichnet, daß** der Anschlag (101) unter Druckbeaufschlagung in eine Anschlagstellung verfahrbar ist.

30. Steuereinrichtung nach einem der Ansprüche 27 bis 29,
**dadurch gekennzeichnet, daß** die von der Schaltwelle (43) abgewandte Kolbenfläche des Anschlages (101) größer ist als die gegenüberliegende Kolbenfläche (106).

31. Steuereinrichtung nach einem der Ansprüche 27 bis 30,
**dadurch gekennzeichnet, daß** in den den Anschlag (101) aufnehmenden Druckraum (103) mindestens eine Druckleitung (104) mündet.

32. Steuereinrichtung nach einem der Ansprüche 23 bis 31,
**dadurch gekennzeichnet, daß** jede Schaltwelle (43) über eine Schaltgabel (115) mit Schaltmuffen (75) der entsprechenden Getriebewellen (77) gekuppelt ist.

33. Steuereinrichtung nach einem der Ansprüche 23 bis 32,
**dadurch gekennzeichnet, daß** jede Schaltwelle (43) zur Gassen- oder zur Gangwahl mittels eines Aktuators (118) um ihre Achse drehbar ist.

34. Steuereinrichtung nach dem vorhergehenden Anspruch,
**dadurch gekennzeichnet, daß** der Aktuator (118) einen äußeren und einen inneren Drehkolben (122, 127) aufweist, die begrenzt gegeneinander drehbar sind.

35. Steuereinrichtung nach dem vorhergehenden Anspruch,
**dadurch gekennzeichnet, daß** die Schaltwelle (43) drehfest mit dem inneren Drehkolben (127) verbunden ist.

36. Steuereinrichtung nach Anspruch 34 oder 35,
**dadurch gekennzeichnet, daß** die Schaltwelle (43) axial gegenüber dem inneren Drehkolben (172) verschiebbar ist.

37. Steuereinrichtung nach einem der Ansprüche 23 bis 32,
**dadurch gekennzeichnet, daß** jede Schaltwelle (43) mit einem Schaltelement (39) einer Betätigungseinrichtung (29) kuppelbar ist, die einen Drehaktuator (118) aufweist.

38. Steuereinrichtung nach dem vorhergehenden Anspruch,
**dadurch gekennzeichnet, daß** mit dem Drehaktuator (118) eine das Schaltelement (39) tragende Welle (40) drehbar ist.

39. Steuereinrichtung nach Anspruch 1,
**dadurch gekennzeichnet, daß** der Hydraulikgehäuseteil (10) am Getriebegehäuse (1) befestigt ist.

40. Steuereinrichtung nach dem vorhergehenden Anspruch,
**dadurch gekennzeichnet, daß** der Magnetgehäuseteil (3) aus einem nichtleitenden Material besteht.

41. Steuereinrichtung nach Anspruch 39 oder 40,
**dadurch gekennzeichnet, daß** der Deckel (13) aus Metall besteht.

42. Steuereinrichtung nach dem vorhergehenden Anspruch,
**dadurch gekennzeichnet, daß** die Elektronikplatte (11) am Deckel (13) befestigt ist.

43. Steuereinrichtung nach einem der vorhergehenden Ansprüche,
**dadurch gekennzeichnet, daß** eine Wegsensorik (201) im Magnetgehäuseteil (3) untergebracht ist.

44. Steuereinrichtung nach einem der vorhergehenden Ansprüche,
**dadurch gekennzeichnet, daß** eine Drucksensorik (203) im Magnetgehäuseteil (3) untergebracht ist.

## Claims

1. Electronic-hydraulic control device for transmissions of vehicles, preferably of motor vehicles, having a casing (3, 10) which has
- a magnet casing part (3), in which electronics (11, 12) for controlling solenoid valves (4 to 8) and magnet parts of the solenoid valves (4 to 8) are accommodated, and
- a hydraulics casing part (10) which is situated at least partially inside the transmission casing (1), is supplied with pressure medium and in which there are hydraulic parts of the solenoid valves (4 to 8),
it being possible for the control device together with the hydraulics casing part (10) to be installed in an installation opening (2) in a transmission casing (1).

2. Control device according to Claim 1, **characterized in that** the hydraulics casing part (10) has a shoulder (17), to which a pump (14) for the pressure medium and a motor (15) for the pump (14) are attached.

3. Control device according to the preceding claim, **characterized in that** the pump (14) and the motor (15) are provided on opposite sides of the shoulder (17).

4. Control device according to Claim 2 or 3, **characterized in that** the pump (14) is located inside the transmission casing (1).

5. Control device according to one of Claims 2 to 4, **characterized in that** the motor (15) projects out of the transmission casing (1).

6. Control device according to one of the preceding claims, **characterized in that** at least one reservoir (24) is provided for the pressure medium.

7. Control device according to the preceding claim, **characterized in that** the reservoir (24) is integrated in the control device.

8. Control device according to the preceding claim, **characterized in that** the reservoir (24) is accommodated in the hydraulics casing part (10).

9. Control device according to Claim 7 or 8, **characterized in that** the reservoir (24) has at least one bellows element (51) which is accommodated in a receiving space (52).

10. Control device according to the preceding claim, **characterized in that** the bellows element (51) is filled with air.

11. Control device according to one of Claims 6 to 8, **characterized in that** the reservoir (24) has a piston (62) which prestresses the reservoir medium.

12. Control device according to the preceding claim, **characterized in that** the piston (62) is subject to the force of at least one spring (63, 68).

13. Control device according to one of Claims 2 to 5, **characterized in that** the control device is provided with a plug connector (70) for connection to the motor (15).

14. Control device according to the preceding claim, **characterized in that** the plug connector (70) is located inside the transmission casing (1).

15. Control device according to one of the preceding claims, **characterized in that** a gear selector (29) is accommodated in the hydraulics casing part (10).

16. Control device according to the preceding claim, **characterized in that** the gear selector (29) can be actuated by the solenoid valves (4 to 8).

17. Control device according to one of the preceding claims, **characterized in that** the control device can be used to hydraulically activate shifting sleeves (75) of the transmission.

18. Control device according to the preceding claim, **characterized in that** the shifting sleeves (75) are provided with two pressure chambers (87, 88), to each of which a pressure line (89, 90) is connected.

19. Control device according to the preceding claim, **characterized in that** the pressure lines (89, 90) are bores in the respective transmission shaft (77) of the transmission.

20. Control device according to Claim 18 or 19, **characterized in that** a piston (109, 110) is accommodated in each of the pressure chambers (87, 88).

21. Control device according to the preceding Claim, **characterized in that** the pistons (109, 110) are of identical design and are arranged mirror-symmetrically with respect to one another.

22. Control device according to Claim 20 or 21, **characterized in that** the pistons (109, 110) are each assigned a mating stop (113, 114) in the shifting sleeve (75) for one limit position.

23. Control device according to one of the preceding claims, **characterized in that** gearshift shafts (43) of the transmission can be hydraulically displaced.

24. Control device according to the preceding claim, **characterized in that** a piston (95) is positioned on each gearshift shaft (43).

25. Control device according to the preceding claim, **characterized in that** the piston (95) separates two pressure chambers (97, 98) from one another.

26. Control device according to the preceding claim, **characterized in that** a pressure line (99, 100) opens into each pressure chamber (97, 98).

27. Control device according to one of Claims 24 to 26, **characterized in that** the pistons (95) of the gearshift shafts (43) are each assigned a stop (101).

28. Control device according to the preceding claim, **characterized in that** the stop (101) is a piston which can be acted on by pressure.

29. Control device according to Claim 27 or 28, **characterized in that** the stop (101) can be displaced into a stop position under the action of pressure.

30. Control device according to one of Claims 27 to 29, **characterized in that** the piston surface of the stop (101) which is remote from the gearshift shaft (43) is larger than the opposite piston surface (106).

31. Control device according to one of Claims 27 to 30, **characterized in that** at least one pressure line (104) opens into the pressure chamber (103) which accommodates the stop (101).

32. Control device according to one of Claims 23 to 31, **characterized in that** each gearshift shaft (43) is coupled, via a gearshift fork (115), to shifting sleeves (75) of the corresponding transmission shafts (77).

33. Control device according to one of Claims 23 to 32, **characterized in that** each gearshift shaft (43) can be rotated about its axis by means of an actuator (118) in order to select a gate arm or gear.

34. Control device according to the preceding claim, **characterized in that** the actuator (118) has an outer rotary piston (122) and an inner rotary piston (127), which can rotate to a limited extent with respect to one another.

35. Control device according to the preceding claim, **characterized in that** the gearshift shaft (43) is connected in a rotationally fixed manner to the inner rotary piston (127).

36. Control device according to Claim 34 or 35, **characterized in that** the gearshift shaft (43) is axially displaceable with respect to the inner rotary piston (172).

37. Control device according to one of Claims 23 to 32, **characterized in that** each gearshift shaft (43) can be coupled to a gearshift element (39) of an actuating device (29) which has a rotary actuator (118).

38. Control device according to the preceding claim, **characterized in that** a shaft (40) which bears the gearshift element (39) can rotate with the rotary actuator (118).

39. Control device according to Claim 1, **characterized in that** the hydraulics casing part (10) is attached to the transmission casing (1).

40. Control device according to the preceding claim, **characterized in that** the magnet casing part (3) consists of a nonconductive material.

41. Control device according to Claim 39 or 40, **characterized in that** the cover (13) consists of metal.

42. Control device according to the preceding claim, **characterized in that** the electronics panel (11) is attached to the cover (13).

43. Control device according to one of the preceding claims, **characterized in that** a displacement sensor arrangement (201) is accommodated inside the magnet casing part (3).

44. Control device according to one of the preceding claims, **characterized in that** a pressure sensor arrangement (203) is accommodated inside the magnet casing part (3).

## Revendications

1. Dispositif électronique-hydraulique de commande pour boîte de vitesses de véhicules, de préférence de véhicules à moteur, comportant un carter (3, 10) qui présente:
- une partie de carter magnétique (3) dans lequel sont installées une électronique (11, 12) pour la commande d'électrovannes (4 à 8) et les parties magnétiques des électrovannes (4 à 8) et,
- une partie de carter hydraulique (10) qui se trouve au moins en partie à l'intérieur du carter de boîte de vitesses (1), alimentée en fluide sous pression et placée dans la partie hydraulique des électrovannes (4 à 8),
le dispositif de commande pouvant être monté avec la partie du carter hydraulique (10) dans une ouverture de montage (2) d'un carter de boîte de vitesses (1).

2. Dispositif de commande selon la revendication 1, **caractérisé en ce que** la partie de carter hydraulique (10) présente un appendice (17) sur lequel sont fixés une pompe (14) pour le fluide sous pression et un moteur (15) pour la pompe (14).

3. Dispositif de commande selon la revendication précédente, **caractérisé en ce que** la pompe (14) et le moteur (15) sont prévus sur des côtés mutuellement opposés de l'appendice (17).

4. Dispositif de commande selon la revendication 2 ou 3, **caractérisé en ce que** la pompe (14) est placée dans le carter de boîte de vitesses (1).

5. Dispositif de commande selon l'une des revendications 2 à 4, **caractérisé en ce que** le moteur (15) s'étend hors du carter de boîte de vitesses (1).

6. Dispositif de commande selon l'une des revendications précédentes, **caractérisé en ce qu'**au moins un accumulateur (24) est prévu pour le fluide sous pression.

7. Dispositif de commande selon l'une des revendications précédentes, **caractérisé en ce que** l'accumulateur (24) est intégré dans le dispositif de commande.

8. Dispositif de commande selon l'une des revendications précédentes, **caractérisé en ce que** l'accumulateur (24) est installé dans la partie de carter hydraulique (10).

9. Dispositif de commande selon la revendication 7 ou 8, **caractérisé en ce que** l'accumulateur (24) présente au moins un élément en soufflet (51) qui est installé dans une chambre de réception (52).

10. Dispositif de commande selon la revendication précédente, **caractérisé en ce que** l'élément en soufflet (51) est rempli d'air.

11. Dispositif de commande selon l'une des revendications 6 à 8, **caractérisé en ce que** l'accumulateur (24) présente un piston (62) qui place le fluide accumulé sous pression.

12. Dispositif de commande selon la revendication précédente, **caractérisé en ce que** le piston (62) subit la force d'au moins un ressort (63, 68).

13. Dispositif de commande selon l'une des revendications 2 à 5, **caractérisé en ce que** le dispositif de commande est doté d'une fiche (70) pour le raccordement au moteur (15).

14. Dispositif de commande selon la revendication précédente, **caractérisé en ce que** la fiche (70) est placée dans le carter de boîte de vitesses (1).

15. Dispositif de commande selon l'une des revendications précédentes, **caractérisé en ce qu'**un dispositif d'engagement des rapports (29) est installé dans la partie de carter hydraulique (10).

16. Dispositif de commande selon la revendication précédente, **caractérisé en ce que** le dispositif d'engagement des rapports (29) peut être actionné par les électrovannes (4 à 8).

17. Dispositif de commande selon l'une des revendications précédentes, **caractérisé en ce que** des manchons de commutation (75) de la boîte de vitesses peuvent être commandés hydrauliquement par le dispositif de commande.

18. Dispositif de commande selon la revendication précédente, **caractérisé en ce que** les manchons de commutation (75) sont dotés de deux chambres sous pression (87, 88) à chacune desquelles est raccordé un conduit sous pression (89, 90).

19. Dispositif de commande selon la revendication précédente, **caractérisé en ce que** les conduits sous pression (89, 90) sont des alésages ménagés dans l'arbre de boîte de vitesses (77) correspondant de la boîte de vitesses.

20. Dispositif de commande selon la revendication 18 ou 19, **caractérisé en ce qu'**un piston (109, 110) respectif est installé dans les chambres sous pression (87, 88).

21. Dispositif de commande selon la revendication précédente, **caractérisé en ce que** les pistons (109, 110) ont la même forme et sont disposés à symétrie spéculaire l'un par rapport à l'autre.

22. Dispositif de commande selon la revendication 20 ou 21, **caractérisé en ce que** pour l'une des positions d'extrémité, une contrebutée (113, 114) respective est associée aux pistons (109, 110) dans le manchon de commutation (75).

23. Dispositif de commande selon l'une des revendications précédentes, **caractérisé en ce que** des arbres de commutation (43) de la boîte de vitesses peuvent être déplacés hydrauliquement.

24. Dispositif de commande selon la revendication précédente, **caractérisé en ce qu'**un piston (95) est placé sur chaque arbre de commutation (43).

25. Dispositif de commande selon la revendication précédente, **caractérisé en ce que** le piston (95) sépare l'une de l'autre deux chambres sous pression (97, 98).

26. Dispositif de commande selon la revendication précédente, **caractérisé en ce qu'**un conduit sous pression (99, 100) respectif débouche dans chaque chambre sous pression (97, 98).

27. Dispositif de commande selon l'une des revendications 24 à 26, **caractérisé en ce qu'**une butée (101) respective est associée aux pistons (95) des arbres de commutation (43).

28. Dispositif de commande selon la revendication précédente, **caractérisé en ce que** la butée (101) est un piston pouvant être sollicité en pression.

29. Dispositif de commande selon la revendication 27 ou 28, **caractérisé en ce que** la butée (101) peut être déplacée dans une position de butée sous l'action d'une pression.

30. Dispositif de commande selon l'une des revendications 27 à 29, **caractérisé en ce que** la surface de piston, opposée à l'arbre de commutation (43), de la butée (101) est plus grande que la surface de piston (106) opposée.

31. Dispositif de commande selon l'une des revendications 27 à 30, **caractérisé en ce qu'**au moins un conduit sous pression (104) débouche dans la chambre sous pression (103) qui reçoit la butée (101).

32. Dispositif de commande selon l'une des revendications 23 à 31, **caractérisé en ce que** chaque arbre de commutation (43) est accouplé par l'intermédiaire d'une fourche de commutation (115) à des manchons de commutation (75) de l'arbre de boîte de vitesses (77) correspondant.

33. Dispositif de commande selon l'une des revendications 23 à 32, **caractérisé en ce que** chaque arbre de commutation (43) peut être tourné autour de son axe au moyen d'un actionneur (118) pour la commutation du passage ou du rapport.

34. Dispositif de commande selon la revendication précédente, **caractérisé en ce que** l'actionneur (118) présente un piston rotatif extérieur et un piston rotatif intérieur (122, 127) qui peuvent tourner l'un par rapport à l'autre de manière limitée.

35. Dispositif de commande selon la revendication précédente, **caractérisé en ce que** l'arbre de commutation (43) est solidaire en rotation du piston rotatif intérieur (127).

36. Dispositif de commande selon la revendication 34 ou 35, **caractérisé en ce que** l'arbre de commutation (43) peut être déplacé axialement par rapport au piston rotatif intérieur (172).

37. Dispositif de commande selon l'une des revendications 23 à 32, **caractérisé en ce que** chaque arbre de commutation (43) peut être accouplé à un élément de commutation (39) d'un dispositif d'actionnement (29) qui présente un actionneur de rotation (118).

38. Dispositif de commande selon la revendication précédente, **caractérisé en ce qu'**un arbre (40) qui porte l'élément de commutation (39) peut être mis en rotation par l'actionneur de rotation (118).

39. Dispositif de commande selon la revendication 1, **caractérisé en ce que** la partie de carter hydraulique (10) est fixée sur le carter de boîte de vitesses (1).

40. Dispositif de commande selon la revendication précédente, **caractérisé en ce que** la partie de carter magnétique (3) est réalisée en un matériau non conducteur.

41. Dispositif de commande selon la revendication 39 ou 40, **caractérisé en ce que** le couvercle (13) est réalisé en métal.

42. Dispositif de commande selon la revendication précédente, **caractérisé en ce que** la carte électronique (11) est fixée sur le couvercle (13).

43. Dispositif de commande selon l'une des revendications précédentes, **caractérisé en ce qu'**un dispositif de détection de déplacement (201) est installé dans la partie de carter magnétique (3).

44. Dispositif de commande selon l'une des revendications précédentes, **caractérisé en ce qu'**un dispositif de détection de pression (203) est installé dans la partie de carter magnétique (3).
